**Europäisches Patentamt**

**European Patent Office**

**Office européen des brevets**

(19)

(11) Numéro de publication: **0 194 944**
**B1**

(12)

# FASCICULE DE BREVET EUROPEEN

(45) Date de publication du fascicule du brevet:
23.05.90

(51) Int. Cl.⁵: **H04N 9/31**

(21) Numéro de dépôt: **86400518.6**

(22) Date de dépôt: **11.03.86**

(54) **Dispositif de réglage de convergence pour vidéoprojecteur.**

(30) Priorité: **15.03.85 FR 8503901**

(43) Date de publication de la demande:
**17.09.86 Bulletin 86/38**

(45) Mention de la délivrance du brevet:
**23.05.90 Bulletin 90/21**

(84) Etats contractants désignés:
**BE CH DE GB IT LI NL**

(56) Documents cités:
**US-A- 3 943 279**
**US-A- 4 422 019**

(73) Titulaire: **SOCIETE ELECTRONIQUE DE LA REGION PAYS DE LOIRE, 74, rue du Surmelin, F-75020 Paris(FR)**

(72) Inventeur: **Ahmari, Hossein, THOMSON-CSF SCPI 19, avenue de Messine, F-75008 Paris(FR)**
Inventeur: **Colineau, Joseph, THOMSON-CSF SCPI 19, avenue de Messine, F-75008 Paris(FR)**

(74) Mandataire: **Grynwald, Albert et al, THOMSON-CSF SCPI, F-92045 PARIS LA DEFENSE CEDEX 67(FR)**

## Description

L'invention est relative à un dispositif de réglage de convergence pour un vidéoprojecteur à plusieurs tubes à rayons cathodiques.

Un vidéoprojecteur est un récepteur de télévision projetant des images sur un écran de plus grandes dimensions que les écrans habituels des tubes à rayons cathodiques. Le type le plus courant comporte trois tubes à rayons cathodiques, un pour chaque couleur fondamentale, et, pour chacun de ces tubes, une optique de projection sur un écran. Les images produites par les trois tubes doivent se superposer parfaitement sur l'écran. Ce résultat est pratiquement impossible à atteindre par de simples réglages d'orientation des tubes et des optiques de projection. Les raisons de cette impossibilité sont diverses : la dispersion, inhérente à la fabrication en grande série, des formes d'images produites par chacun des tubes; les objectifs, habituellement en matière plastique, qui, pour des raisons d'économie, ne présentent pas de corrections chromatiques et qui, ainsi, n'ont pas le même indice de réfraction pour les trois couleurs fondamentales; les axes des trois tubes ne peuvent pas être tous perpendiculaires à l'écran de projection : en général l'axe du tube projetant l'image verte est en principe perpendiculaire à l'écran et les axes des tubes projetant les images rouge et bleue sont inclinés en sens contraire par rapport à cette perpendiculaire; ainsi l'image verte peut être rectangulaire alors que les images rouge et bleue ont une forme de trapèze à bords parallèles verticaux.

C'est pourquoi un vidéoprojecteur comprend un circuit de correction ou réglage de convergence qui engendre des courants alimentant des bobines agissant sur les déviations horizontale et verticale du faisceau d'électrons de deux des tubes, en général le rouge et le bleu, pour mettre en forme les images correspondantes afin qu'elles se superposent, sur l'écran, à l'image projetée par le premier tube, à savoir le vert. Cette correction est effectuée soit directement sur les courants des bobines de déviation ligne (horizontale) et de déviation trame (verticale) grâce à des éléments actifs et des modulateurs, soit à l'aide de déviateurs auxiliaires.

Jusqu'à présent pour effectuer ces réglages de convergence lors de l'installation du vidéoprojecteur, on fait généralement appel à des circuits analogiques à potentiomètres qui sont réglés pour que soient élaborés des signaux de correction de convergence éventuellement variables d'une zone à une autre de l'image.

On connaît également (brevet US-A 3 943 279) un dispositif de réglage de type numérique qui comprend une mémoire vive dans laquelle sont stockées des valeurs de correction correspondant à des corrections des courants de balayage pour les diverses zones en laquelle est divisée l'image, ces valeurs étant restituées en synchronisme avec le balayage des zones lors du fonctionnement normal, et un moyen de calcul pour, lors de la phase de réglage, modifier les valeurs en mémoire en fonction des ordres émis par l'utilisateur qui effectue ce réglage par zone ou groupe de zones par observation de l'image. Le circuit de ce brevet est d'un maniement compliqué.

Le circuit selon l'invention est de type numérique, peu coûteux tout en permettant toutefois un grand nombre de réglages par des personnes n'ayant pas de compétence particulière.

Le dispositif de l'invention est donc un dispositif de réglage de convergence pour vidéoprojecteur en couleurs à trois tubes monochromes projetant chacun une image d'une couleur déterminée sur un écran, ce dispositif, de type numérique, agissant sur le balayage des deuxième et troisième tubes pour superposer sur l'écran, leurs images à celle du premier tube et il comprend une mémoire vive dans laquelle sont stockées des valeurs de correction correspondant à des corrections des courants de balayage pour les diverses zones en laquelle est divisée l'image, ces valeurs étant restituées en synchronisme avec le balayage des zones lors du fonctionnement normal, et un moyen de calcul pour, lors de la phase de réglage, modifier les valeurs en mémoire en fonction des ordres émis par l'utilisateur qui effectue ce réglage par zone ou groupe de zones par observation de l'image. Ce dispositif est caractérisé en ce qu'il comprend un moyen pour imposer une séquence d'étapes de réglage se succédant selon un ordre déterminé, les signaux de correction de toutes les zones étant modifiés simultanément dans la mémoire au cours de la première étape grâce à un tableau de correction en mémoire du microprocesseur, le nombre de zones de l'image affectées par la correction au cours des étapes suivantes allant ensuite en décroissant, le nombre total des étapes étant cependant inférieur au nombre de zones de l'image.

Le réglage effectué par l'utilisateur lorsqu'il observe l'image consiste par exemple à observer la superposition de deux curseurs (figures simples) de couleurs différentes.

Au cours de la première étape on effectue le réglage par observation des curseurs au centre de l'image et le moyen de calcul, tel qu'un microprocesseur, commande la modification des valeurs de correction dans la mémoire de façon à déplacer l'ensemble de l'image rouge et de l'image bleue, c'est-à-dire que toutes les zones sont concernées par cette première étape du réglage. Au cours des étapes suivantes, le nombre de zones affectées par les réglages diminue progressivement.

Cette séquence automatique de réglage présente l'avantage de pouvoir être effectuée plus rapidement que le réglage zone par zone. En outre elle peut encore être raccourcie étant donné que les premières étapes de réglage affectent toute l'image, c'est-à-dire que même dès la première étape on a déjà effectué un premier réglage global de l'image, ce qui ne serait pas le cas si on effectuait le réglage zone par zone.

Pour effectuer le réglage l'utilisateur dispose, dans une réalisation, d'un boîtier de télécommande, par exemple du type usuel à infrarouge, avec des touches dont chacune lui permet d'émettre des ordres de corrections à mettre en mémoire et qui se traduisent, sur l'écran, par le déplacement d'un curseur d'une couleur déterminée dans une direction (horizontale ou verticale) déterminée. Ainsi chaque zone de la mémoire vive comporte quatre signaux de correction : le premier pour le rouge horizontal, le second pour le rouge vertical, le troisième pour le bleu horizontal et le quatrième pour le bleu vertical. Quand le réglage est effectué zone par zone il faut, pour chaque zone, déplacer le curseur bleu pour le superposer au curseur vert et effectuer la même opération pour la couleur rouge, c'est-à-dire déplacer le curseur rouge afin de le superposer au curseur vert.

Par ailleurs il est préférable que le réglage s'effectue par pas de déplacement du curseur, à chaque pas correspondant un incrément d'augmentation (ou diminution) de chaque valeur de correction dans les zones de la mémoire. Dans ce cas, pour s'affranchir de l'accumulation, à chaque pas, des imprécisions dues à la nature numérique des signaux, on effectue la modification, à chaque pas, des valeurs de correction en mémoire avantageusement de la façon suivante : on soustrait du contenu de la mémoire n incréments, n étant le nombre algébrique de pas effectués préalablement au dernier déplacement du curseur et on ajoute au résultat de cette soustraction (n + 1) ou (n - 1) fois (selon le sens du déplacement) l'incrément.

Dans une réalisation préférée le vidéoprojecteur est du type utilisable pour des standards à nombres de lignes différents et le microprocesseur permet de calculer les modifications à apporter aux valeurs des signaux de correction lors d'un changement de standard sans qu'il y ait besoin d'effectuer de nouveau les réglages. Ainsi un vidéoprojecteur qui a été réglé par l'utilisateur avec la norme SECAM peut être utilisé automatiquement, sans nouveau réglage, avec un magnétoscope de norme NTSC à 525 lignes par trame au lieu de 625 lignes.

Pour découper l'image en zones on utilise, par exemple, un générateur d'adresses présentant un oscillateur à fréquence qui est un multiple pair, par exemple 64, de la fréquence de balayage horizontal, le signal de cet oscillateur étant synchronisé au signal de balayage ligne, et au moins un diviseur à sorties parallèles sur lesquelles apparaissent des signaux à fréquences décroissantes; l'état de certaines des impulsions est utilisé pour représenter les coordonnées horizontales des zones et d'autres impulsions, à fréquences plus basses, sont utilisées pour représenter, selon leur état, les coordonnées verticales des zones. De préférence les deux premières sorties du diviseur, aux fréquences les plus élevées, commandent la séquence de lecture (ou de réglage) des quatre signaux de correction dans chaque zone de la mémoire.

Pour un vidéoprojecteur multistandard le diviseur présente deux parties, la première pour produire les impulsions de lecture des signaux de correction dans chaque zone et les impulsions d'adresses en direction horizontale, et la seconde pour produire les impulsions d'adresses en direction verticale, cette seconde partie, qui est alimentée par la première, étant programmable pour modifier le nombre de lignes dans chaque zone en fonction du standard, une zone comprenant par exemple 24 lignes en SECAM et 20 lignes en NTSC.

Un vidéoprojecteur comporte aussi habituellement des circuits de correction de géométrie agissant sur le balayage des trois tubes (alors que pour le réglage des convergences on agit sur le balayage de deux tubes) pour corriger les déformations usuelles de l'image de télévision telles que le coussin nord-sud, le coussin est-ouest ainsi que les déformations spécifiques au vidéoprojecteur, qui sont dûes à l'inclinaison variable des axes des tubes par rapport à une perpendiculaire à l'écran. En effet le cas le plus courant est un écran vertical et des tubes dont les axes ne sont pas dans un plan horizontal mais dans un plan incliné vers le haut dans le sens de la projection; la forme de la surface de projection constitue aussi une cause possible de déformation géométrique de l'image.

Ces défauts de géométrie sont, comme les défauts de convergence, corrigés en agissant sur les champs de déviation horizontale et verticale à l'aide de circuits de correction de géométrie. Certaines corrections de géométrie sont indépendantes de l'orientation des tubes par rapport à l'écran ou de la forme de ces derniers; elles sont généralement effectuées par le constructeur. Les autres corrections sont effectuées par l'utilisateur (ou l'installateur) : il s'agit des défauts de trapèze horizontal, de linéarité verticale et d'amplitude verticale. Le défaut d'amplitude verticale est un écart de la hauteur de l'image par rapport à la normale; le défaut de linéarité verticale consiste en la non-conservation des distances selon la direction verticale et le défaut de trapèze horizontal est une déformation de l'image qui, au lieu d'être rectangulaire, a une forme de trapèze à bords horizontaux parallèles. Le dispositif de réglage selon l'invention comporte, en plus du circuit de réglage de convergence, de préférence un tel circuit de réglage de géométrie à effectuer par l'utilisateur, le moyen de réglage étant, comme pour le réglage des convergences, de préférence sur un boîtier de télécommande.

D'autres caractéristiques et avantages de l'invention apparaîtront avec la description de certains de ses modes de réalisation, celle-ci étant effectuée en se référant aux dessins ci-annexés sur les quels :

- la figure 1 est un schéma simplifié de vidéoprojecteur à trois tubes,
- la figure 2 est un schéma d'ensemble d'un circuit selon l'invention,
- la figure 3 est un schéma de la partie de réglage de géométrie,
- la figure 4 représente la division de l'image en zones,

- la figure 5 est un schéma de générateur d'adresses du circuit de l'invention,
- les figures $6_a$ à $6_h$ montrent une partie des signaux émis par le générateur d'adresses,
- la figure 7 est un schéma de générateur de mire et de curseur faisant partie du circuit de l'invention,
- la figure 8 montre une mire et un curseur,
- les figures $9_a$ et $9_b$ sont des diagrammes montrant une caractéristique de fonctionnement du circuit de la figure 2,
- la figure 10 est un schéma d'interpolateur faisant partie du circuit de l'invention,
- les diagrammes des figures $11_a$ à $11_f$ montrent le fonctionnement de l'interpolateur de la figure 10,
- la figure 12 montre une autre partie du circuit de la figure 2,
- la figure 13 représente encore une autre partie du circuit de la figure 2,
- la figure 14 est un schéma de boîtier de télécommande faisant partie du dispositif de l'invention, et
- la figure 15 illustre une séquence de réglage.

Dans l'exemple le vidéoprojecteur 10 comporte trois tubes monochromes 11, 12 et 13 projetant des images de couleurs respectivement verte V, rouge R et bleue B sur un écran 14 grâce à des objectifs, respectivement $11_1$, $12_1$ et $13_1$.

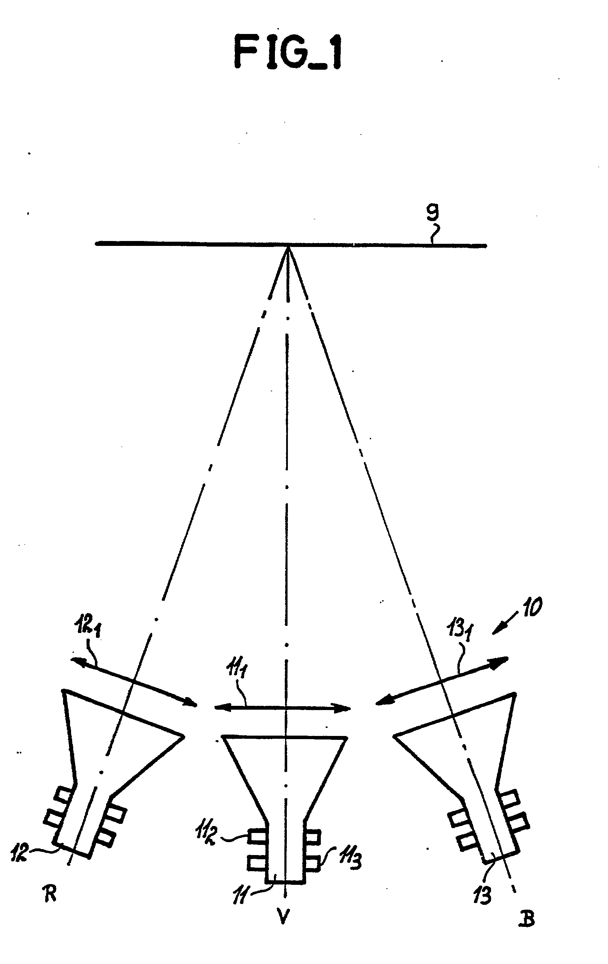

Chaque tube comporte des déviateurs principaux pour assurer les balayages horizontal et vertical du faisceau d'électrons produit par le canon à électrons dans ce tube et une paire de déviateurs auxiliaires agissant également sur le faisceau d'électrons pour effectuer les corrections de géométrie et de convergence. Sur la figure 1, pour le tube vert 11, la paire de déviateurs principaux porte la référence $11_2$ et la paire auxiliaire porte la référence $11_3$.

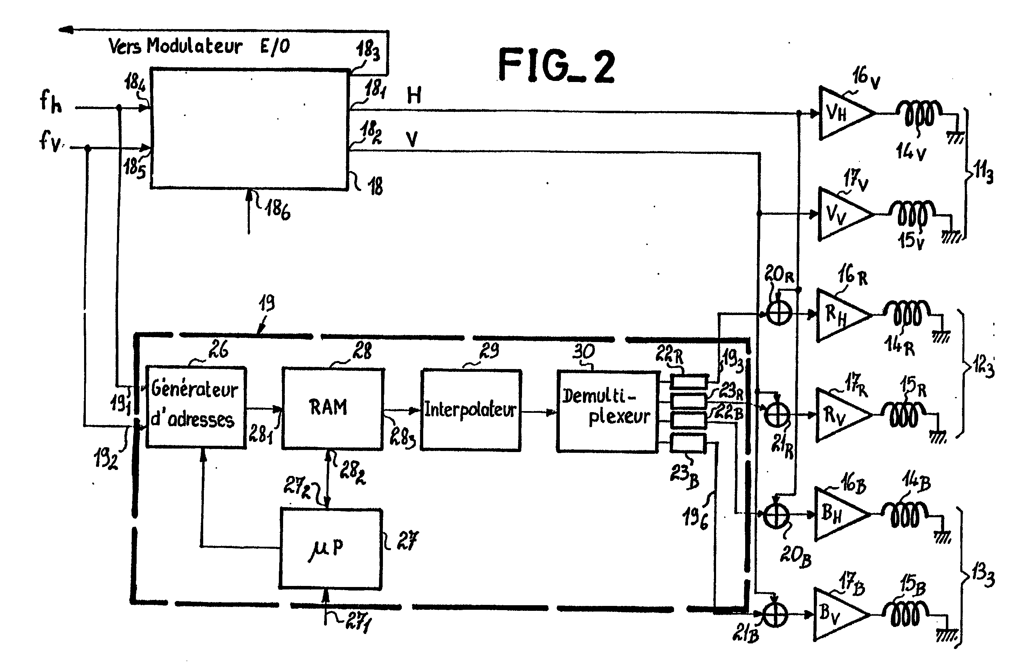

Chaque paire de déviateurs se compose de deux bobinages, l'un pour la déviation horizontale 14 et l'autre pour la déviation verticale 15. Sur la figure 2 les chiffres de référence de ces bobinages ont été affectés d'un indice correspondant à la couleur du tube correspondant, V pour le vert, R pour le rouge et B pour le bleu. Chaque bobinage est alimenté en courant électrique par un amplificateur de convergence, de référence 16 pour la déviation horizontale et de référence 17 pour la déviation verticale. Chaque amplificateur 16, 17 fournit sur sa sortie un courant d'intensité proportionnelle à la tension présentée sur son entrée. La déviation du spot sur l'écran par rapport à sa position nominale est proportionnelle à l'intensité du courant traversant le déviateur.

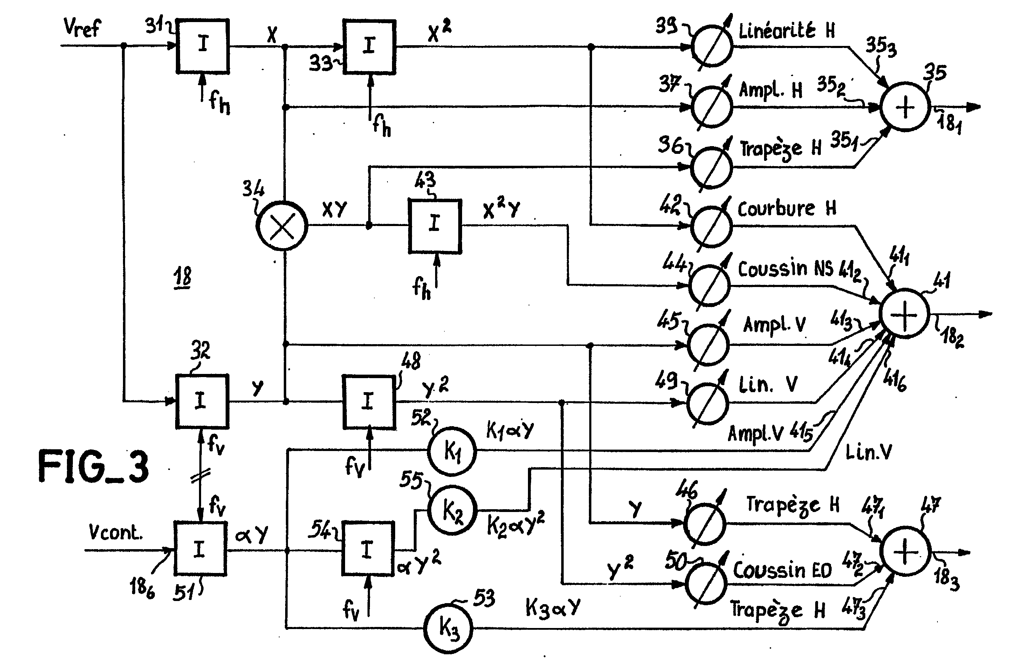

On a représenté sur la figure 2, d'une part, le circuit de correction de géométrie 18 et, d'autre part, le circuit de réglage de convergence 19. Le circuit de correction de géométrie 18 présente deux sorties $18_1$ et $18_2$ alimentant les entrées de tous les amplificateurs de convergence horizontaux et verticaux, et une troisième sortie $18_3$ commandant un modulateur est-ouest (non représenté) associé aux déviateurs principaux. Comme on le verra ci-après en relation avec la figure 3 ce circuit 18 présente deux entrées $18_4$ et $18_5$ recevant des signaux aux fréquences de balayage respectivement horizontal (ou ligne) $f_h$ et vertical (ou trame) $f_v$.

Le circuit de correction de géométrie 18 alimente les trois paires d'amplificateurs de convergence 16 et 17. Par contre le circuit de correction de convergence 19 n'alimente que deux paires d'amplificateurs de convergence, ceux qui sont associés au tube 12 rouge (R) et au tube bleu 13 (B). Pour permettre l'alimentation simultanée de ces amplificateurs de convergence $16_R$, $16_B$, $17_R$, $17_B$ par les circuits 18 et 19 on prévoit un additionneur $20_R$, $21_R$, $20_B$, $21_B$ pour chacun de ces quatre amplificateurs.

Le circuit 19 présente, comme le circuit 18, deux entrées $19_1$ et $19_2$ recevant des signaux aux fréquences de balayage ligne $f_h$ et trame $f_v$. Il comporte avant ses quatre sorties $19_3$ à $19_6$, alimentant les entrées correspondantes des additionneurs $20_R$, $21_R$, $20_B$, $21_B$, des convertisseurs numériques-analogiques $22_R$, $23_R$, $22_B$, $23_B$.

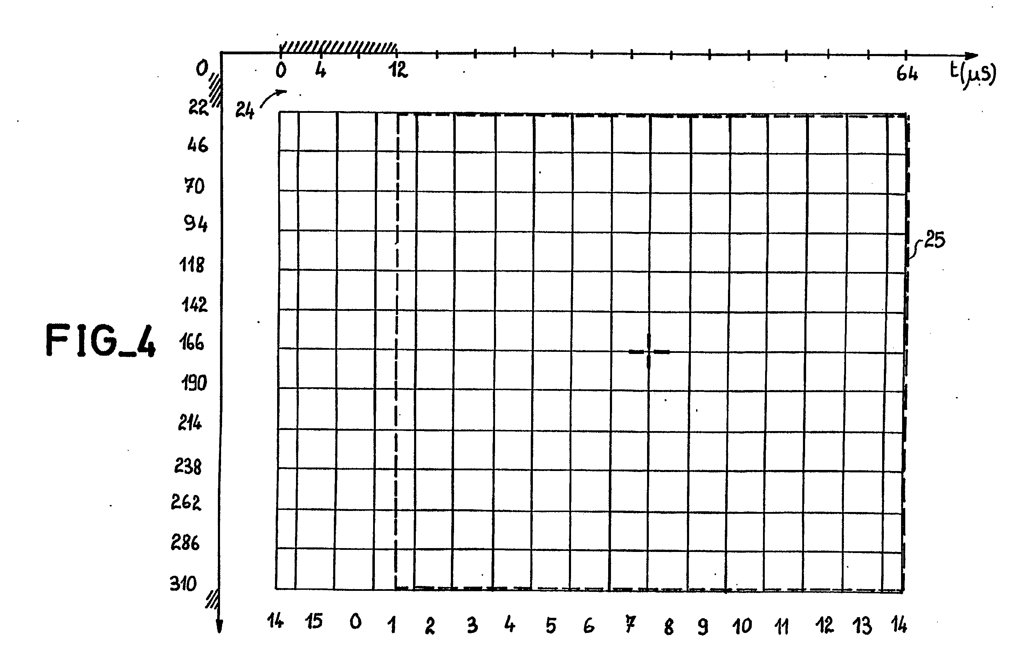

Le circuit de réglage de convergence 19, dont le rôle est de superposer les images rouge et bleue à l'image verte, est basé sur la division de l'écran en 208 zones : 16 zones, numérotées de 0 à 15 sur la figure 4, en direction horizontale et 13 zones en direction verticale dont une zone 24 (figure 4) d'initialisation correspondant à l'intervalle de suppression trame. Sur la figure 4 le rectangle 25, délimité par une ligne en traits interrompus épais, correspond à la partie visible de l'image sur l'écran. En abscisses on a porté le temps t en microsecondes, en plus des numéros de zones en direction horizontale, et, en ordonnées, on a indiqué de haut en bas le numéro des lignes de balayage pour la première demi-trame dans le standard SECAM ou PAL à 625 lignes par image.

A chacune des zones sont affectées quatre valeurs de correction, c'est-à-dire quatre signaux sur les sorties $19_3$ à $19_6$.

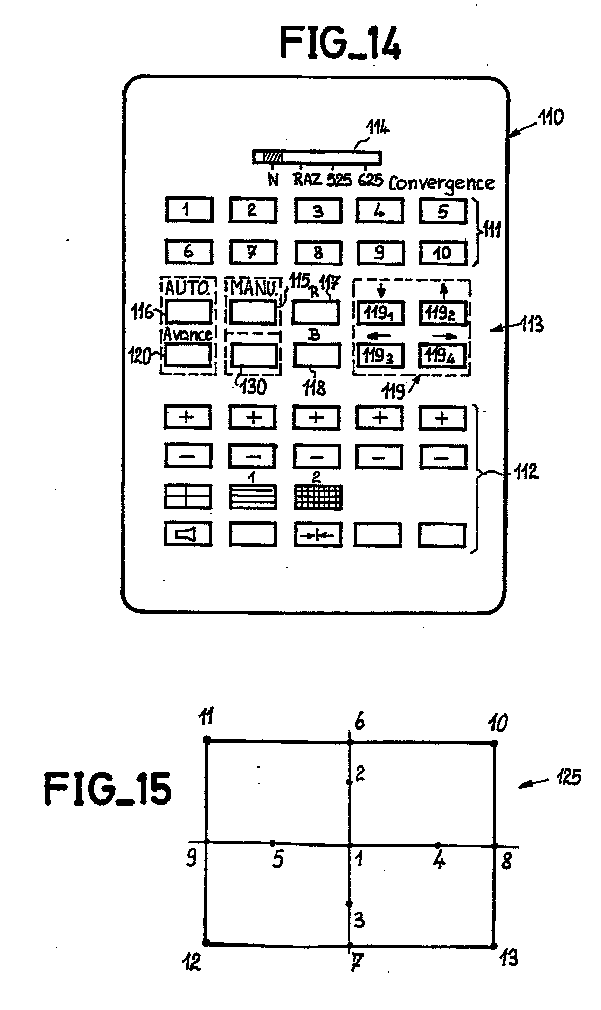

Le découpage en zones est effectué à l'aide d'un générateur d'adresses 26 recevant les signaux de fréquences $f_h$ et $f_v$ et, pour permettre la modification de la séquence des signaux d'adresses en cas de changement de standard, à l'aide d'un microprocesseur 27, faisant également partie du circuit 19, et qui présente une entrée $27_1$ recevant des signaux d'un boîtier de télécommande (figure 14). Le microprocesseur intervient aussi pour le calcul des signaux de correction.

Ces signaux de correction sont stockés dans une mémoire vive RAM 28 de capacité 2 kilo-octets avec une entrée $28_1$ connectée à la sortie du générateur d'adresses 26 et une entrée-sortie $28_2$ connectée à une entrée-sortie $27_2$ du microprocesseur 27. A cette mémoire vive 28 est associé un accumulateur (non représenté) pour sauvegarder son contenu lorsque le circuit est débranché de son alimentation en énergie électrique.

La sortie $28_3$ de la mémoire 28 est reliée à l'entrée d'un interpolateur 29 dont le rôle est, comme on le verra plus loin, de lisser les valeurs de correction d'une zone verticale à une autre (dans une même colonne). Les signaux de sortie de cet interpolateur 29 sont en série, comme les signaux de la mémoire 28; ils alimentent un démultiplexeur 30 relié aux quatre sorties $19_3$ à $19_6$ par les convertisseurs numériques-analogiques 22 et 23.

Le microprocesseur 27 est utilisé lors de la phase de réglage des convergences pour modifier le contenu de la mémoire 28 en fonction des ordres émis par l'utilisateur. Ce microprocesseur 27 est également utilisé pour transformer automatiquement les valeurs de correction emmagasinées dans la mémoire 28 lors d'un changement de standard, sans que l'utilisateur ait à intervenir, par exemple quand on passe du standard SECAM au standard NTSC à 525 lignes par image. Autrement dit il n'est pas nécessaire d'effectuer un nouveau réglage quand on change de standard.

Circuit 18 de correction de géométrie (figure 3):

Ce circuit 18 engendre des signaux - qui ne peuvent être modifiés par l'utilisateur - pour effectuer les corrections classiques de défauts géométriques intrinsèques au balayage en télévision. Ce circuit 18 engendre aussi des signaux réglables par l'utilisateur grâce au boîtier de télécommande agissant sur l'entrée $18_6$. Ces réglages accessibles à l'utilisateur sont ceux qui permettent de compenser la non-perpendicularité à l'écran 9 des trois faisceaux lumineux projetés par les objectifs $11_1$, $12_1$ et $13_1$. Ces réglages affectent d'abord l'amplitude verticale, c'est-à-dire qu'ils modifient la hauteur de l'image. Ils affectent aussi la linéarité verticale, c'est-à-dire qu'ils permettent de rétablir les distances en direction verticale. Enfin l'utilisateur peut effectuer aussi le réglage de "trapèze horizontal" pour modifier la longueur des lignes afin de rétablir la forme rectangulaire de l'image.

Les réglages non accessibles à l'utilisateur comprennent aussi des réglages d'amplitude verticale, de linéarité verticale et de trapèze horizontal. En outre on prévoit des corrections de linéarité horizontale, d'amplitude horizontale, de courbure horizontale, de coussin nord-sud et de coussin est-ouest.

Pour élaborer les corrections de géométrie non réglables par l'utilisateur, qui sont dites "fixes", on part d'une tension de référence $V_{ref}$ qu'on intègre à la fréquence-ligne $f_h$ et à la fréquence-trame $f_v$ pour former des signaux proportionnels à x, à $x^2$, à y, à $y^2$, à xy et à $x^2y$, x et y étant les coordonnées, respectivement horizontale et verticale, du spot sur l'écran.

Pour les corrections accessibles à l'utilisateur, dites "variables", on part d'une tension de contrôle $V_{cont}$, de valeur réglable par l'utilisateur à partir du boîtier de télécommande, qu'on intègre à la fréquence trame pour former des signaux proportionnels à y et $y^2$.

Le signal $V_{ref}$ est appliqué à l'entrée d'un premier intégrateur 31 remis à zéro à la fréquence ligne $f_h$ et à l'entrée d'un intégrateur 32 remis à zéro à la fréquence trame $f_v$. Sur la sortie de l'intégrateur 31 on obtient un signal x qui est appliqué à l'entrée d'un second intégrateur 33 commandé aussi à la fréquence $f_h$ et délivrant ainsi sur sa sortie un signal $x^2$.

La sortie de l'intégrateur 31 est reliée à la première entrée d'un multiplicateur 34 dont la seconde entrée reçoit le signal de sortie de l'intégrateur 32, c'est-à-dire le signal y. Ainsi la sortie du multiplicateur 34 délivre un signal xy qui est appliqué sur une entrée $35_1$ d'un additionneur 35 par l'intermédiaire d'un potentiomètre 36 de réglage de trapèze horizontal.

Le signal de sortie de l'intégrateur 31 est aussi appliqué sur une seconde entrée $35_2$ de l'additionneur 35 par l'intermédiaire d'un autre potentiomètre 37 de réglage de l'amplitude horizontale. L'additionneur 35 comporte une troisième entrée $35_3$ recevant le signal $x^2$ de sortie de l'intégrateur 33 avec un coefficient qui dépend du réglage d'un potentiomètre 39 de linéarité horizontale. La sortie de l'additionneur 35 constitue la sortie $18_1$ de correction horizontale du générateur 18.

Le signal $x^2$ de sortie de l'intégrateur 33 est également appliqué sur la première entrée $41_1$ d'un autre additionneur 41 par l'intermédiaire d'un potentiomètre 42 de réglage de la courbure horizontale. La sortie de l'additionneur 41 constitue la sortie $18_2$ de correction verticale du générateur 18.

La sortie xy du multiplicateur 34 est appliquée à l'entrée d'un autre intégrateur 43 commandé à la fréquence ligne $f_h$ et délivrant donc sur sa sortie un signal $x^2y$ qui est appliqué, par l'intermédiaire d'un potentiomètre 44, sur la seconde entrée $41_2$ de l'additionneur 41. Le signal sur l'entrée $41_2$ effectue la correction de coussin nord-sud.

La sortie de l'intégrateur 32 qui délivre un signal y est transmise à la troisième entrée $41_3$ de l'additionneur 41 par l'intermédiaire d'un potentiomètre 45 de réglage de l'amplitude verticale. Le signal de sortie de l'intégrateur 32 est aussi appliqué, par l'intermédiaire d'un potentiomètre 46, à la première entrée $47_1$ d'un additionneur 47 dont la sortie constitue la sortie $18_3$ du circuit 18 qui est reliée à un modulateur est-ouest, c'est-à-dire à un circuit effectuant une multiplication par x. Le signal appliqué sur l'entrée $47_1$ effectue une correction de trapèze horizontal.

Le signal y de sortie de l'intégrateur 32 est appliqué sur l'entrée d'un autre intégrateur 48 commandé à la fréquence de balayage trame et délivrant donc sur sa sortie un signal $y^2$ qui est appliqué, par l'intermédiaire d'un potentiomètre 49, sur la quatrième entrée $41_4$ de l'additionneur 41. Ce signal sur l'entrée $41_4$

contribue à la correction de linéarité verticale. Le signal $y^2$ est aussi appliqué sur la seconde entrée $47_2$ de l'additionneur 47 par l'intermédiaire d'un autre potentiomètre 50 pour effectuer la correction de coussin est-ouest.

La tension de contrôle $V_{cont}$ réglable par l'utilisateur à l'aide de la télécommande (touche 130, figure 14) est appliquée sur l'entrée d'un intégrateur 51 commandé à la fréquence verticale $f_v$ et délivrant ainsi sur sa sortie un signal proportionnel à y soit $\alpha$ y. Ce signal $\alpha$ y est transmis à la cinquième entrée $41_5$ de l'additionneur 41 par l'intermédiaire d'une résistance 52 (ou plusieurs résistances) multipliant par un coefficient $K_1$. Le signal $K_1 \alpha$ y sur l'entrée $41_5$ permet d'effectuer la correction d'amplitude verticale.

Le signal $\alpha$ y de sortie de l'intégrateur 51 est appliqué, par l'intermédiaire d'une (ou plusieurs) résistance(s) 53 multipliant par un coefficient $K_3$, sur la troisième entrée $47_3$ de l'additionneur 47. Le signal en $47_3$ contribue à la correction de trapèze horizontal.

Enfin le signal $\alpha$ y alimente l'entrée d'un intégrateur 54 commandé à la fréquence de balayage vertical et délivrant ainsi sur sa sortie un signal $\alpha y^2$ qui est transmis sur une sixième entrée $41_6$ de l'additionneur 41 par l'intermédiaire d'une (ou plusieurs) résistance(s) 55 multipliant par un coefficient $K_2$. Le signal $K_2 \alpha y^2$ appliqué sur l'entrée $41_6$ permet d'effectuer la correction de linéarité verticale.

Il est à noter que le modulateur est-ouest, qui reçoit les signaux de sortie de l'additionneur 47 et fait partie du circuit de base du vidéoprojecteur, apporte la correction de plus grande amplitude, ce qui est particulièrement utile pour la correction de trapèze horizontal qui est la correction la plus importante à effectuer.

Enfin la tension de référence des intégrateurs à fréquence verticale 32, 48, 51 et 54 est réglable, sous la commande du microprocesseur 27, lors d'un changement de standard. Il est à noter aussi, comme on le verra plus loin, que la tension de référence des convertisseurs 22, 23 est également réglable et pour la même raison.

Circuit 19 de réglage de convergence.

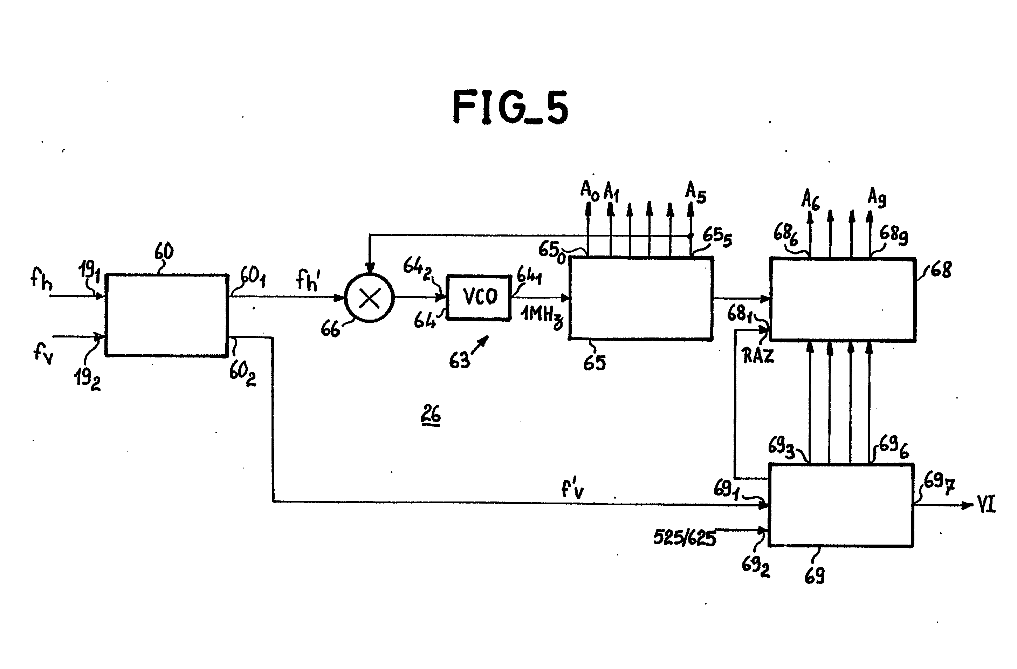

I. Générateur d'adresses 26 (figure 5).

Les signaux de fréquences $f_h$ et $f_v$ apparaissant sur les entrées $19_1$ et $19_2$ sont appliqués à un circuit de mise en forme 60 transformant les impulsions sensiblement sinusoïdales en des impulsions rectangulaires.

Cette mise en forme est illustrée sur le diagramme des figures $6_a$ et $6_b$ pour le signal à la fréquence de balayage horizontal : sur l'entrée $19_1$ est appliqué le signal 61 apparaissant à chaque ligne entre les instants 0 et 12 μs, c'est-à-dire pendant la période de retour de balayage-ligne. Cette impulsion 61 varie de façon sensiblement sinusoïdale avec un maximum au temps t = 6 μs. Sur la sortie $60_1$ on obtient un signal noté $f'_h$ également à la fréquence de balayage horizontal mais formé d'impulsions rectangulaires 62 (figure $6_b$).

Le signal $f'_h$ est transmis à une boucle de phase 63 comportant un oscillateur 64 commandé par la tension (VCO) engendrant sur sa sortie $64_1$ un signal à la fréquence de 1 MHz qui est transmis à un diviseur 65 du type synchrone de quotient soixante quatre (64). Le synchronisme du signal de l'oscillateur 64 avec le signal d'entrée $f'_h$ est obtenu grâce à la connexion d'une sortie $65_5$ du diviseur 65 à la seconde entrée d'un multiplicateur 66 dont la première entrée reçoit le signal $f'_h$ et dont la sortie est reliée à l'entrée $64_2$ de commande de l'oscillateur 64.

Le diviseur synchrone 65 présente six sorties $65_0$ à $65_5$ sur lesquelles apparaissent des signaux, respectivement $A_0$ à $A_5$, qui sont représentés par les diagrammes des figures $6_c$ à $6_h$. Le signal $A_0$ est un signal rectangulaire périodique de rapport cyclique ¼ de fréquence 0,5 MHz (la moitié de la fréquence du signal de sortie de l'oscillateur 64), le signal $A_1$ a une fréquence moitié de celle du signal $A_0$, la fréquence du signal $A_2$ est la moitié de celle du signal $A_1$, etc...Ainsi le signal $A_5$ a la fréquence de 15 625 hertz, c'est-à-dire la fréquence de balayage-ligne $f_h$.

Les signaux $A_0$ et $A_1$ sont utilisés, dans chaque zone, pour commander la séquence de mise en mémoire (ou de lecture) des signaux de correction pour les amplificateurs de convergence. Ainsi lorsque $A_0 = 0$ on met en mémoire (ou on lit) les signaux de correction pour les déviateurs auxiliaires horizontaux de convergence; pour $A_0 = 1$ ce sont les signaux de correction pour les déviateurs verticaux qui sont mis en mémoire ou lus. Si $A_1 = 0$ on met en mémoire (ou on agit sur) la voie rouge R et si $A_1 = 1$ c'est le voie bleue B qui intervient.

Les quatre signaux restants, $A_2$ à $A_5$, constituent les bits d'un nombre binaire qui représente le numéro de l'une des seize colonnes ou zones horizontales (figure 4).

Les numéros des rangées ou zones verticales sont produits à l'aide d'un diviseur programmable 68 à sorties $68_6$ à $68_9$ sur lesquelles apparaissent quatre bits $A_6$ à $A_9$. Le diviseur 68 est remis à zéro à chaque début de trame grâce à un circuit de contrôle 69 émettant une impulsion de remise à zéro appliquée sur une entrée $68_1$. Ce circuit 69 est, à cet effet, connecté à la sortie $60_2$ du circuit de mise en forme 60 et reçoit donc sur une entrée $69_1$ un signal rectangulaire $f'_v$ à fréquence de balayage vertical.

Le circuit 69 comporte une autre entrée $69_2$ recevant un signal représentatif du standard, c'est-à-dire du nombre de lignes par trame. En effet l'image étant divisée en un nombre constant (13) de rangées le nombre de lignes par zone variera avec le standard. Ainsi en standard 625 lignes, chaque zone comporte 24 lignes par demi-trame tandis qu'en standard 525 lignes chacune de ces zones comprend 20 lignes par demi-trame. Dans ces conditions le circuit de commande 69 présente quatre sorties parallèles $69_3$ à $69_6$ reliées à des entrées correspondantes du diviseur 68 pour que le facteur de division soit tel que chaque zone comprenne ainsi le nombre correspondant de lignes par demi-trame.

Enfin le circuit 69 présente une sortie $69_7$ destinée à commander, comme on le verra plus loin, le transfert d'une valeur initiale de la mémoire 28 vers un intégrateur faisant partie de l'interpolateur 29.

Cet interpolateur a pour but de lisser les valeurs de correction d'une zone verticale à une autre.

II. Le lissage entre les zones contigües en <u>direction horizontales</u> s'effectue de façon naturelle par les temps de réponse des bobinages auxiliaires et des amplificateurs de convergence. La réponse d'un amplificateur de convergence avec le bobinage associé est représenté sur les figures $9_a$ et $9_b$. La figure $9_a$ représente un signal v appliqué à l'entrée d'un amplificateur de convergence et la figure $9_b$ montre le signal Δ x obtenu dans le bobinage correspondant. L'ensemble amplificateur-bobinage présente ainsi une réponse de Bessel de temps de montée égal à la largeur (4 μs) d'une zone en direction horizontale.

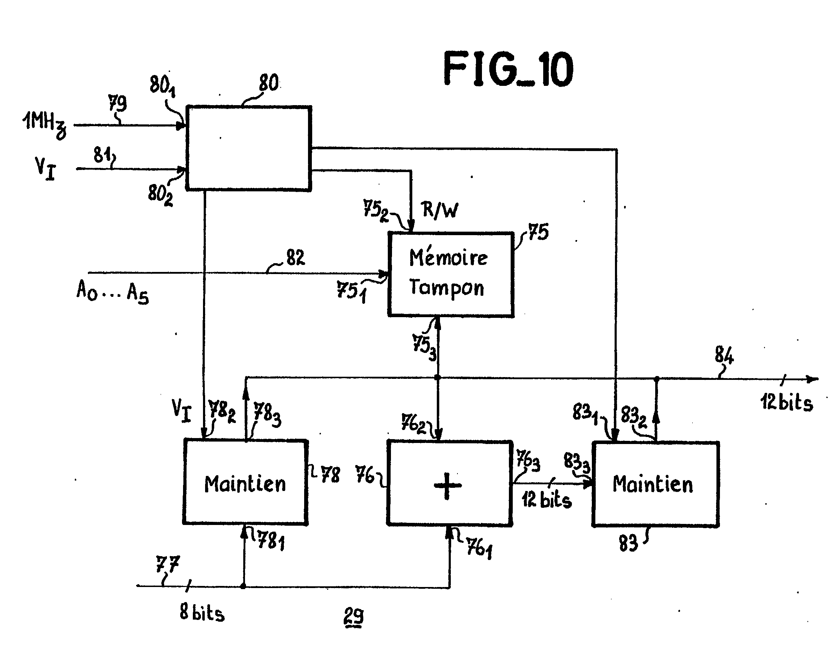

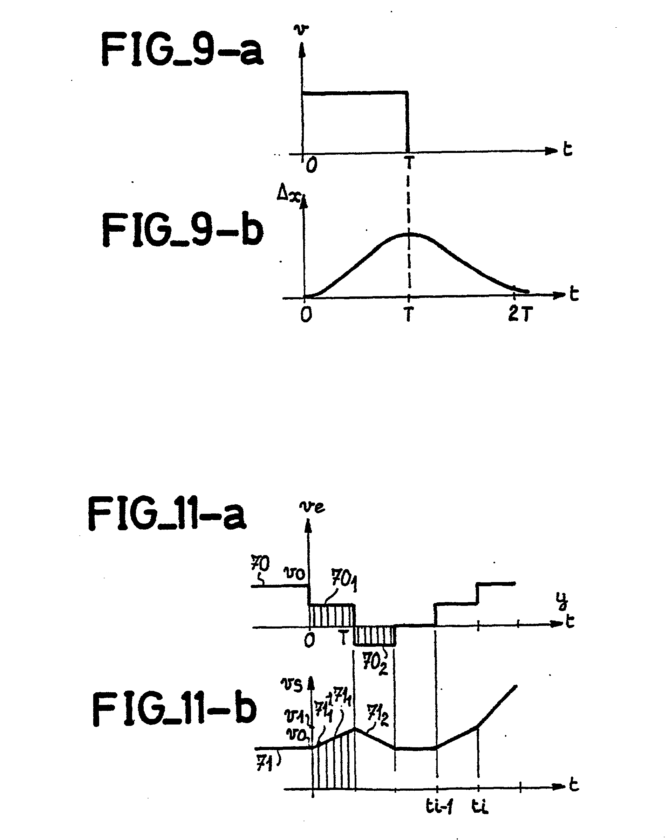

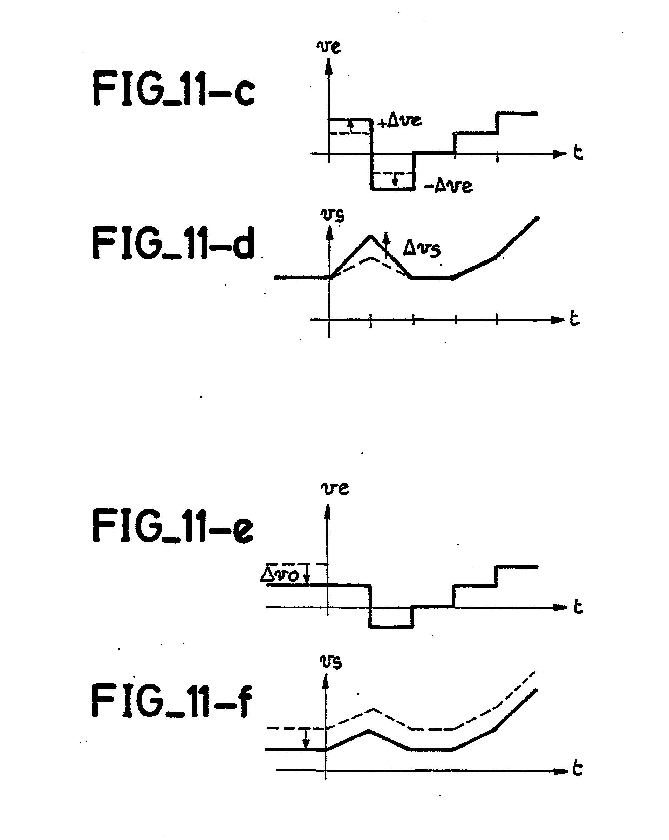

III. Interpolateur 29 (figures 10 et 11).

La difficulté (par rapport au lissage horizontal) du lissage en direction verticale provient du fait que les zones concernées ne sont pas contigües dans le temps.

Avant de décrire, en relation avec la figure 10, l'interpolateur 29 on explique d'abord, avec les diagrammes des figures $11_a$ à $11_f$, le principe de cette interpolation linéaire.

L'interpolation linéaire est effectuée en affectant à chaque zone initiale pendant le retour trame une valeur constante représentée par le segment 70 sur la figure $11_a$ et le segment 71 sur la figure $11_b$. Par contre dans les autres zones de la même colonne verticale les signaux de correction ne restent pas constants mais varient de façon linéaire. Cette variation linéaire est représentée par les segments $71_1$, $71_2$, etc... sur la figure $11_b$. Le taux de variation linéaire est en général différent d'une zone à une autre. Autrement dit à chaque zone on affecte une valeur constante qui est la pente des segments $71_1$, $71_2$, c'est-à-dire le taux de variation du signal de correction dans cette zone. Ainsi sur la figure $11_a$, la pente de la première zone visible de l'image est représentée par le segment $70_1$, la pente pour la seconde zone est représenté par le segment $70_2$, etc...

Bien entendu les segments contigüs de la figure $11_b$ se raccordent l'un à l'autre, c'est-à-dire qu'à chaque changement de zone en direction verticale il n'y a pas de discontinuité mais simplement un changement de pente. Dans une zone de numéro i le signal de correction $v_{Si}$ (figure $11_b$) varie de la façon suivante:

$$(1) \qquad V_{Si} = V_{Si-1} + \frac{1}{T} V_{ei} (t - t_{i-1}).$$

Dans cette formule: T représente la durée d'une zone en direction verticale, c'est-à-dire, dans l'exemple, à la durée de 24 lignes (dans le standard 625 lignes) ou 20 lignes (standard 525 lignes), $V_{Si-1}$ est la valeur atteinte par le signal $V_s$ à la dernière ligne de la zone précédente, et $t_{i-1}$ est l'instant du début de la zone.

On notera que les segments 70, $70_1$ ainsi que les segments 71, $71_1$, $71_2$...de la figure $11_b$ représentent des enveloppes de signaux et non pas des signaux car ceux-ci n'apparaissent que pendant 1/16ème de la durée de chaque ligne (largeur d'une colonne). Autrement dit les segments 70 et 71 ne sont pas, comme représenté, des segments continus mais des suites de segments parallèles à l'axe des abscisses.

Quand on veut modifier le signal de correction dans une colonne d'image visible on augmente (ou on diminue) la pente dans cette zone, c'est-à-dire qu'on augmente (ou on diminue) d'une quantité Δ $V_e$ le signal $V_e$ pour cette zone. Mais pour ne pas affecter les zones suivantes on diminue (ou on augmente) de la même quantité Δ $V_e$ le signal de la zone verticale immédiatement suivante (figure $11_c$). Ainsi, comme le montre la figure $11_d$, le signal $V_s$ n'est modifié que pour la zone en question et la zone suivante. En variante, pour ladite modification, on peut, à la place de la zone suivante, faire intervenir la zone précédente.

Pour une correction d'une même valeur pour toutes les zones d'une même colonne (figure $11_f$) il suffit de décaler le signal $V_e$ affecté à la zone initiale (retour-trame) de la quantité correspondante pour obtenir le résultat désiré (figure $11_e$).

Il est à noter ici qu'à chaque zone correspondent quatre valeurs de correction : rouge horizontal, rouge vertical, bleu horizontal et bleu vertical. En d'autres termes pour chaque colonne on prévoit quatre segments 70 dans la zone initiale et pour les zones visibles on prévoit quatre valeurs de pente.

L'interpolateur réalisant les fonctions décrites en relation avec la figure 11 est représenté sur la figure 10. Il comprend un intégrateur numérique multiplexé constitué principalement d'une mémoire tampon 75 de capacité de 64 mots de douze bits et d'un additionneur 76 additionnant des mots de douze bits.

L'intégration consiste, pour chaque ligne, à augmenter le contenu de la mémoire 75 de la valeur d'un incrément fonction de la valeur du signal $V_e$ dans la zone en question (figure 11$_a$). Cette augmentation est effectuée à l'aide de l'additionneur 76. Si on se reporte à la formule (1) on voit que l'incrément a pour valeur

$$\frac{V_{ei}}{24}$$

en standard 625 lignes et

$$\frac{V_{ei}}{20}$$

en standard NTSC.

L'intégrateur reçoit ses informations de la mémoire 28 et des signaux de commande du générateur d'adresses 26.

Sur la figure 10 le conducteur 77 est relié à la sortie de la mémoire 28. Il applique ces signaux numériques de huit bits, d'une part, sur une entrée 76$_1$ de l'additionneur 76 et, d'autre part, sur l'entrée 78$_1$ d'un circuit de maintien 78. Les signaux fournis par le générateur d'adresses 26 sont, d'une part, un signal de 1 MHz sur un conducteur 79 acheminé à l'entrée 80$_1$ d'un circuit de commande 80, d'autre part, un signal $V_I$ de commande de valeur initiale à la fin du retour trame (sur la ligne 22 dans le système PAL-SECAM) acheminé par un conducteur 81 connecté à l'entrée 80$_2$ du circuit de com mande 80 et, d'autre part enfin, des signaux d'adresse $A_0$ à $A_5$, correspondant au numéro de la colonne concernée, acheminés par un conducteur 82 sur une entrée 75$_1$ de la mémoire 75. Le circuit de commande 80 fournit un signal R/W de lecture-écriture sur une entrée correspondante 75$_2$ de la mémoire 75 ainsi que des signaux de lecture-écriture sur des entrées respectives 78$_2$ et 83$_1$ des circuits de maintien 78 et 83.

La mémoire tampon 75 présente une entrée-sortie 75$_3$ pour les données qui est reliée à la sortie 78$_3$ du circuit de maintien 78, à la seconde entrée 76$_2$ de l'additionneur 76 et à la sortie 83$_2$ du second circuit de maintien 83 dont l'entrée de données 83$_3$ est connectée à la sortie 76$_3$ de l'additionneur 76.

Cet interpolateur que l'on vient de décrire en relation avec la figure 10 fonctionne de façon multiplexée et de la façon décrite en relation avec la figure 11, à savoir :

A la fin du retour trame (sur la ligne 22 quand on utilise le système PAL ou SECAM) le générateur d'adresses délivre sur l'entrée 80$_2$ du circuit 80 un signal d'initialisation qui est transmis à l'entrée 78$_2$ du circuit de maintien 78 pour autoriser la transmission vers la mémoire tampon 75 des 64 mots de huit bits fournis par la mémoire 28 (figure 2) et correspondant au signal $V_e$ (figure 11$_a$) pour la zone initiale et cela pour l'ensemble des 16 colonnes, chacune d'elles comportant quatre valeurs de correction : rouge horizontal, rouge vertical, bleu horizontal et bleu vertical.

La mémoire tampon 75 enregistrant les mots sur 12 bits, les 8 bits des mots fournis par la mémoire 28 sont les bits de poids fort tandis que les 4 bits de poids faible de chaque mot de la mémoire 75 sont remis à zéro à cette étape.

Il n'est pas indispensable que cette phase de chargement de la mémoire 75 dure une seule ligne. Elle peut durer plusieurs lignes.

A la ligne suivante, après cette phase de chargement de la mémoire 75, l'intégration proprement dite commence : la première valeur $V_e$ de correction (se traduisant par un signal visible), qui correspond par exemple au rouge horizontal, pour la zone 0 est délivrée sur l'entrée 76$_2$ de l'additionneur 76 et est additionnée à un incrément de huit bits fourni sur l'entrée 76$_1$ par la mémoire 28. Cet incrément a pour valeur

$$\frac{V_0}{24}$$

lorsque chaque zone verticale comporte 24 lignes (voir la formule (1) ci-dessus). On obtient ainsi en sortie 76$_3$ de l'additionneur 76 un signal $V_s$ qui correspond au premier point 71'$_1$ (figure 11$_b$) du segment 71$_1$. Le résultat de l'addition, c'est-à-dire le signal $V_s$ susmentionné, qui est un mot de douze bits, est transmis à la mémoire 75 par l'intermédiaire du circuit de maintien 83 et ce résultat remplace la valeur initiale $V_0$ qui était inscrite dans cette mémoire 75. Ce signal $V_s$ en sortie 83$_2$ du circuit de maintien 83 est également envoyé, par un conducteur 84, au démultiplexeur 30 (figure 2).

L'ensemble de ces opérations dure 1 μs. Sous la commande des variations des signaux transmis par les conducteurs 79 et 82 une nouvelle valeur est lue dans la mémoire 75, par exemple celle qui correspond au rouge vertical de la zone initiale (retour-trame). On recommence ainsi le processus que l'on vient de décrire : élaboration du premier pas d'intégration. La durée d'une ligne étant 64 μs on traite bien les 64 signaux de correction par ligne.

A la ligne suivante le processus d'intégration continue, c'est-à-dire qu'on continue de se déplacer sur le segment 71$_1$. Au bout de 24 lignes de trame, à la fin de la première rangée, la mémoire 28, sous la commande du générateur d'adresse, délivre une nouvelle valeur $V_e$ pour chacun des 64 signaux de correction. On parcourt ainsi le segment $71_2$. Le processus continue ainsi jusqu'à la fin de la trame.

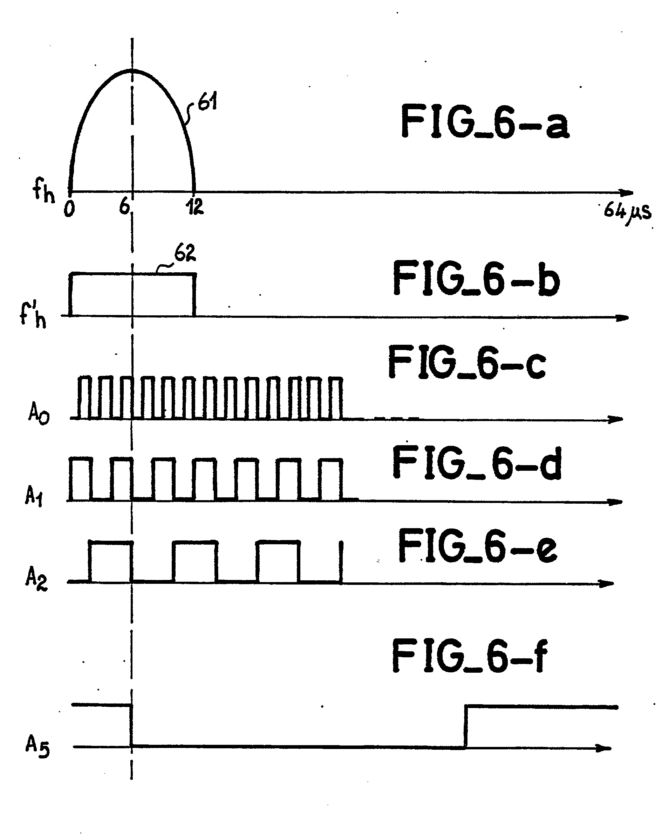

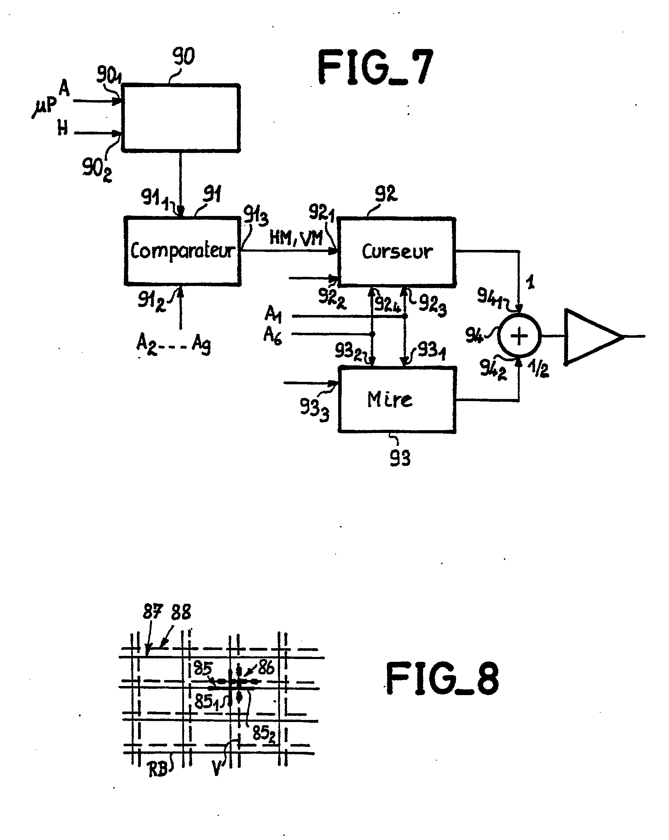

IV. Générateur de curseur et de mire (figures 7 et 8).

Pour faciliter le réglage de convergence on projette sur l'écran un curseur 85 (figure 8) en forme de croix formée de deux traits brillants, l'un vertical $85_1$ et l'autre horizontal $85_2$ de la couleur (rouge ou bleue) à régler et un curseur 86 identique de la couleur verte, chacun de ces curseurs étant dans la zone à régler.

Pour l'utilisateur le réglage consiste à agir sur la télécommande pour déplacer le curseur 85 afin de le superposer au curseur 86.

Egalement pour faciliter le réglage les zones de l'image sont projetées sur l'écran à l'aide d'une mire 87 formée de traits horizontaux et verticaux de la couleur (rouge ou bleue) à régler et d'une autre mire 88 identique à la mire 87, mais de la couleur verte. La brillance des traits des mires 87 et 88 est inférieure à celle des traits des curseurs 85 et 86.

Pour engendrer les curseurs et les mires on utilise le circuit de la figure 7 qui comporte un registre à décalage 90 avec une entrée $90_1$ recevant du microprocesseur 27 l'adresse de la zone dans laquelle le réglage doit être effectué. Cette adresse se compose d'un mot de quatre bits pour la coordonnée horizontale et d'un mot de quatre bits pour la coordonnée verticale. Le microprocesseur 27 fournit également le signal d'horloge H appliqué sur l'entrée $90_2$ correspondante du registre 90. Les sorties parallèles de ce dernier sont appliquées sur les premières entrées d'un comparateur 91 dont les secondes entrées $91_2$ reçoivent le mot $A_2$, $A_3$.... $A_9$ représentant le balayage des zones de l'écran comme on l'a expliqué ci-dessus.

En sortie $91_3$ du comparateur 91 on n'obtient ainsi un signal que pendant le temps d'apparition de la zone concernée. Ce signal est appliqué à l'entrée $92_1$ d'un générateur 92 de curseur 85 ou 86. Ce générateur 92 produit les segments horizontaux $85_2$ et verticaux $85_1$. Il présente une entrée de validation $92_2$ recevant un signal de validation du microprocesseur 27 et deux entrées $92_3$ et $92_4$ recevant les signaux respectivement $A_1$ et $A_6$ fournis par le générateur d'adresses. Ce sont les transitions de ces signaux $A_1$ et $A_6$ qui sont utilisées pour engendrer le curseur en même temps que le signal fourni par le comparateur 91.

Les signaux $A_1$ et $A_6$ sont également utilisés pour engendrer les mires 87 et 88 à l'aide d'un générateur de mire 93 qui comporte, outre deux entrées $93_1$ et $93_2$ recevant ces signaux $A_1$ et $A_6$, une entrée $93_3$ pour un signal de validation provenant du microprocesseur.

La sortie du générateur de curseur 92 est connectée à la première entrée $94_1$ d'un additionneur 94 tandis que la sortie du générateur de mire 93 est reliée à la seconde entrée $94_2$ de l'additionneur 94. Toutefois cet additionneur 94 est tel qu'il affecte le coefficient ¼ au signal appliqué sur son entrée $94_2$. Ainsi le curseur 85 ou 86 est plus brillant que la mire 87 ou 88.

La mire 87, 88 permet le repérage des zones de l'image. Toutefois dans un mode de fonctionnement dit "automatique", comme on le verra plus loin, cette mire n'est pas projetée sur l'écran grâce à l'application d'un signal d'interdiction sur l'entrée $93_3$ du générateur 93. Dans ce cas le curseur se place automatiquement dans la zone à régler, son déplacement d'une zone à une autre étant prévu selon une séquence commandée par le microprocesseur 27.

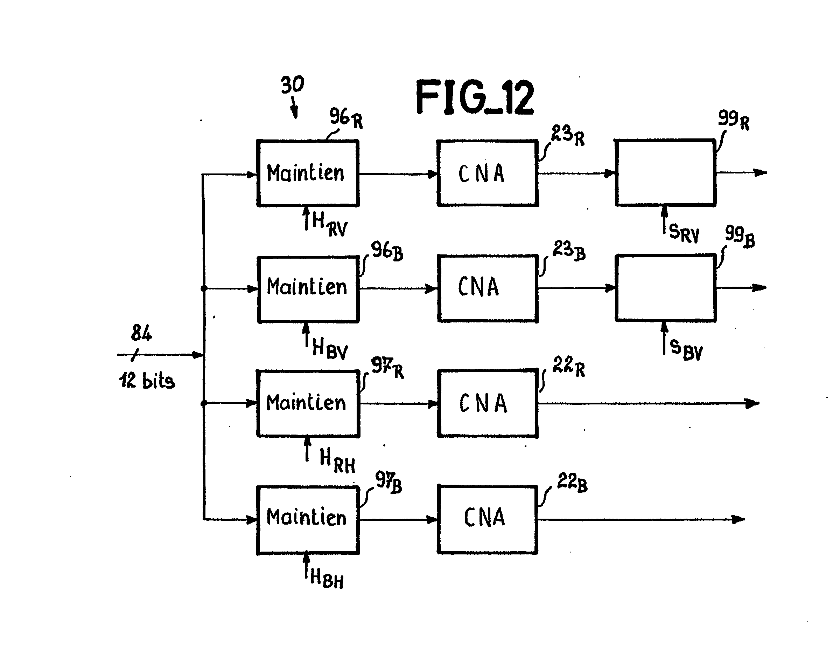

V. Démultiplexeur 30 et convertisseurs numériques-analogiques 22 et 23 (figure 12).

Le conducteur 84 de sortie de l'interpolateur 29 est connecté aux entrées de circuits de maintien $96_R$, $96_B$, $97_R$ et $97_B$. Le circuit de maintien $96_R$ enregistre les signaux de correction destinés à la couleur rouge et à la direction verticale; le circuit $96_B$ enregistre les signaux pour la couleur bleue et la direction verticale; les circuits $97_R$ et $97_B$ enregistrent les signaux de correction pour la direction horizontale et pour, respectivement, les couleurs rouge et bleue. Cet enregistrement sélectif est effectué grâce à des signaux de commande, fournis par un circuit de commande (non montré) qui, à partir des signaux $A_0$ et $A_1$, délivre des signaux d'horloge $H_{RV}$, $H_{BV}$, $H_{RH}$ et $H_{BH}$ ouvrant les circuits de maintien au moment où les signaux de correction correspondants apparaissent sur le conducteur 84. De plus ces signaux d'horloge commandant les circuits de maintien 96 et 97 sont utilisés pour, à chaque ligne et pour la zone correspondante, délivrer leur contenu pendant la durée de 4 s de cette zone. Les circuits 96 et 97 remettent ainsi en phase les signaux de correction appliqués en série sur leur entrée.

Les convertisseurs numériques-analogiques (CNA)$23_R$ et $23_B$ qui convertissent les signaux de correction pour les déviateurs verticaux sont de capacité 12 bits pour éviter les discontinuités en direction verticale. Par contre les discontinuités en direction horizontale sont moins gênantes; c'est pourquoi les convertisseurs numériques-analogiques $22_R$ et $22_B$ sont du type à huit bits.

Par ailleurs entre chaque convertisseur 23 et le déviateur auxiliaire vertical de convergence correspondant est interposé un circuit d'échantillonnage et de maintien $99_R$, $99_B$ dont chacun présente une entrée d'échantillonnage sur laquelle est appliqué un signal de commande, respectivement $S_{RV}$ et $S_{BV}$, fourni par ledit circuit de commande élaborant ces signaux à partir des impulsions $A_0$ et $A_1$. De tels cir-

cuits d'échantillonnage et de maintien permettent de s'affranchir des éventuels états intermédiaires parasites ("glitch") aux sorties des convertisseurs $23_R$ et $23_B$.

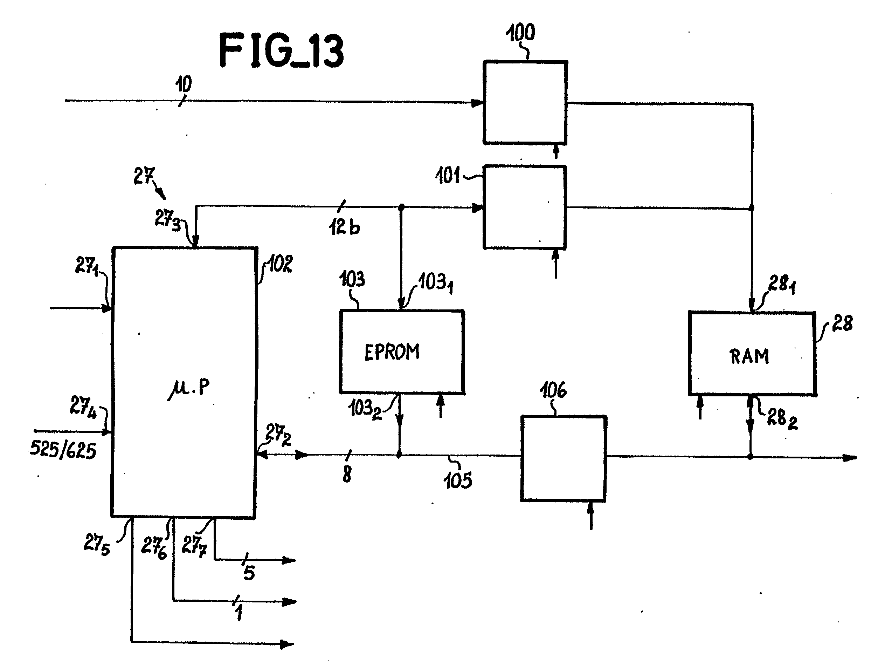

VI. Mémoire vive 28 et microprocesseur 27 (figure 13).

La mémoire 28, de capacité 2 kilo-octets, contient les signaux de correction qui sont appliqués aux déviateurs auxiliaires de convergence lors de l'utilisation habituelle du vidéoprojecteur. Cette mémoire vive 28 est chargée lors de l'étape préliminaire de réglage, sous la commande du microprocesseur 27. Ainsi l'entrée d'adresse $28_1$ de la mémoire 28 est connectée, d'une part, au générateur d'adresses 26 par l'intermédiaire d'un circuit d'aiguillage 100 et, d'autre part, à la sortie d'adresse $27_3$ de l'unité centrale 102 du microprocesseur 27 par l'intermédiaire d'un autre circuit d'aiguillage 101. Ces circuits 100 et 101 ne laissent passer les informations que dans un seul sens, vers l'entrée d'adresse $28_1$, et sont commandés de façon telle que l'un est bloqué lorsque l'autre est passant. Le circuit 100 transmet les signaux $A_0$ à $A_9$ sur 10 bits à l'entrée $28_1$ de la mémoire 28. La sortie $27_3$ du microprocesseur fournit, lors de la phase de réglage, des signaux d'adresse à 10 bits à la mémoire 28.

Le microprocesseur 27 est formé d'une unité centrale 102 et d'une mémoire E PROM 103 de capacité 4 kilo-octets contenant les programmes ou données de programmes pour l'unité centrale. La mémoire 103 présente une entrée d'adresse $103_1$ reliée à la sortie $27_3$ d'adresse de l'unité centrale 102. Les signaux d'adresse appliqués sur l'entrée 103 comportent 12 bits. La sortie de données $103_2$ de la mémoire 103 est reliée, d'une part à l'entrée-sortie de données $27_2$ du microprocesseur et, d'autre part, par un même bus 105 ou conducteur de données, sur lequel se trouve un circuit d'aiguillage 106, à l'entrée-sortie de données $28_2$ de la mémoire 28.

Le circuit d'aiguillage 106 est, selon la commande qu'il reçoit, passant dans un sens ou dans l'autre.

On a également représenté sur la figure 13 l'entrée $27_1$ pour les signaux reçus du boîtier de télécommande, l'entrée $27_4$ du microprocesseur sur laquelle est appliqué un signal représentatif du standard (en général 525 ou 625 lignes). On notera aussi une sortie $27_5$ reliée à l'entrée de validation $93_3$ du générateur de mire 93 (figure 7), une sortie $27_6$ connectée à l'entrée $90_1$ du registre 90 qui délivre l'adresse des curseurs 85 ou 86 et une sortie $27_7$ pour commander les aiguillages 100, 101, 106 ainsi que les mémoires 28 et 103.

Changement de standard.

Lors de l'utilisation normale (après le réglage), en mode dit de "visualisation", le microprocesseur 27 est utilisé pour commander la modification des zones et des signaux de correction lorsqu'un signal sur l'entrée $27_4$ indique une modification du standard. Ce signal appliqué sur l'entrée $27_4$ du microprocesseur 27 est fourni par un circuit de détection de standard (non représenté) comportant, par exemple, un simple commutateur à plots. Le signal du circuit de détection de standard est également transmis sur l'entrée $69_2$ du circuit 69 de commande du générateur d'adresses 26 (figure 5) de manière à modifier le rapport de division du diviseur 68 ainsi que la séquence de comptage notamment la remise à zéro (entrée $68_1$ du diviseur 68).

Comme on l'a déjà vu, chaque zone comporte 20 lignes dans le standard 525 lignes et 24 lignes dans le standard 625 lignes. Du fait du nombre différent de lignes dans chaque zone il est clair que l'interpolation effectuée par intégration comme représenté sur la figure 11 fait intervenir des paramètres différents selon le standard, c'est-à-dire le nombre de lignes par trame.

Dans une réalisation on modifie tous les signaux de correction grâce à un calcul, effectué par le microprocesseur, qui consiste à remplacer toutes les valeurs correspondant aux segments $70_1$, $70_2$, etc... (figure $11_a$) par des valeurs variant de façon inversement proportionnelle au nombre de lignes dans chaque zone.

Dans une autre réalisation, plus simple, on modifie l'amplitude des signaux délivrés par les convertisseurs numériques-analogiques 22 et 23, par exemple en modifiant leurs tensions de référence, dans le rapport inverse du nombre de lignes dans chaque zone; on peut, à la place des tensions de référence des convertisseurs 22 et 23, faire intervenir les gains des amplificateurs de convergence 16 et 17. Dans cette réalisation on modifie aussi les valeurs initiales de correction représentées par les segments 70 et 71 (figures $11_a$ et $11_b$). Ainsi on ne modifie qu'une seule valeur par colonne.

A titre d'exemple lorsque le réglage a été effectué dans le standard 625 lignes et qu'on veut ensuite utiliser le vidéoprojecteur pour un standard 525 lignes les tensions de référence des convertisseurs 22, 23 ou les gains des amplificateurs 16, 17 sont modifiés dans le rapport

$$\frac{24}{20} = \frac{6}{5}$$

et les valeurs initiales $V_0$ sont multipliées par le rapport inverse, c'est-à-dire 5/6.

Etant donné que le calcul fait obligatoirement intervenir une approximation et qu'ainsi, en revenant à un autre standard, par exemple en revenant du 525 lignes au 625 lignes, on ne retrouverait pas obligatoi-

10

rement la valeur initiale, il est nécessaire de conserver en mémoire les valeurs des signaux de correction obtenus lors de la première opération de réglage. A cet effet on utilise une zone de la mémoire vive 28 pour conserver ces valeurs calculées lors du réglage, ces valeurs n'étant, par la suite, pas modifiées, mais utilisées comme références à chaque changement de standard.

Ainsi le vidéoprojecteur peut être utilisé aisément avec divers standards.

Si le réglage a été effectué selon le standard 525 lignes, pour revenir au standard 625 lignes on multiplie les valeurs initiales $V_0$ par 6/5 et on modifie la tension de référence des convertisseurs numériques-analogiques, ou les gains des amplificateurs, dans un rapport de 5/6.

Boîtier de télécommande 110 (figure 14).

Pour contrôler le vidéoprojecteur et effectuer les réglages, l'utilisateur dispose d'un boîtier de télécommande 110 (figure 14) qui comporte les touches classiques 111 de numéros de canal mis en mémoire, et 112 de réglage de volume sonore, de luminosité, d'intensité de couleurs, de recherche de stations et de fréquence d'accord. Ce boîtier comporte en plus, un ensemble 113 de touches pour les corrections de géométrie et de convergence, ainsi qu'un commutateur 114 permettant, selon sa position, que le boîtier 110 de télécommande soit utilisé en mode normal N pour le contrôle des fonctions du vidéoprojecteur, c'est-à-dire pour l'utilisation des touches 111 et 112, ou en mode de réglage indiqué par les positions "convergence" sur la figure 14 avec deux positions correspondant aux deux standards 525 et 625 lignes. En outre on prévoit une position RAZ pour la remise à zéro, ou un retour à un état initial, du contenu de la mémoire 28.

Dans l'exemple le réglage peut être effectué selon deux modes : un premier mode, dit "manuel", par lequel on effectue le réglage de convergence zone par zone, le réglage effectué dans une zone n'affectant pas le réglage effectué dans les autres zones, et un second mode, dit "automatique", qui fait intervenir à chaque réglage l'ensemble de l'image. L'actionnement d'une touche 115 commande le réglage en mode manuel. L'actionnement d'une touche 116 assure le passage en mode automatique.

<u>En mode de réglage manuel</u> le fonctionnement est le suivant :

l'utilisateur place le commutateur 114 dans une position "convergence" correspondant au standard utilisé, par exemple 625 lignes par trame, puis il appuie sur la touche 115. Sur l'écran apparaissent alors au moins une mire 87 ou 88 et au moins un curseur 85 ou 86. Il manipule ensuite des touches $119_1$ à $119_4$ pour amener les curseurs 85 et 86 dans la zone de la mire pour laquelle il désire effectuer le réglage de convergence. L'actionnement de la touche $119_1$ déplace les curseurs en direction verticale vers le bas, la touche $119_2$ commande le déplacement des curseurs aussi en direction verticale mais vers le haut, la touche $119_3$ est affectée au déplacement des curseurs en direction horizontale vers la gauche et la touche $119_4$ effectue ce déplacement horizontal vers la droite.

Une fois les curseurs installés dans la zone désirée, l'utilisateur appuie sur une touche 117 de rouge ou 118 de bleu. Dans cette position sur l'écran apparaît le curseur de la couleur (rouge ou bleue) sélectionnée et la mire de la même couleur ainsi que le curseur vert 86 et la mire verte 88 et l'effet des touches 119 est de déplacer le curseur rouge (ou bleu) 85 par rapport au curseur vert 86. Chaque actionnement de touche 119 dans cette position provoque, sous la commande du microprocesseur, une modification des valeurs de correction dans la mémoire 28 pour la zone correspondante et pour la couleur choisie rouge (ou bleue). Par exemple chaque action sur la touche $119_1$, qui correspond à un déplacement d'un pas du curseur 85 en direction verticale vers le bas, augmente d'un incrément la valeur correspondante dans la mémoire 28 alors que chaque action sur la touche $119_2$ diminue du même incrément la valeur correspondante dans cette mémoire 28. Une fois le réglage effectué pour l'une des couleurs on appuie sur l'autre touche 118 ou 117 pour effectuer le même réglage pour l'autre couleur.

Dans ce mode de réglage manuel les signaux de correction des convergences dans chaque zone sont engendrés de façon indépendante des signaux de correction pour les autres zones de l'image. On notera toutefois que pour assurer cette indépendance il est nécessaire d'effectuer dans une zone voisine en direction verticale une modification comme celle décrite en relation avec les figures $11_c$ et $11_d$.

Ce type de réglage manuel donne de bons résultats. Mais il peut être relativement long et fastidieux notamment en raison du grand nombre de zones que comporte l'image. C'est pourquoi ce réglage peut être utilisé en complément d'un réglage du type automatique qui permet d'effectuer des corrections sur l'ensemble de l'image ou sur un groupe de zones de l'image à chaque séquence de réglage.

<u>En mode automatique</u> le microprocesseur impose une séquence de réglages c'est-à-dire que, tant qu'on se trouve dans ce mode de fonctionnement, l'utilisateur ne peut pas choisir librement la zone dans laquelle se trouve le couple de curseurs : lors de la première étape, ce couple se trouve automatiquement placé en un emplacement déterminé, dans l'exemple au centre de l'écran. Lorsque ce premier réglage a été effectué pour les deux couleurs rouge et bleue par superposition du curseur rouge, puis du curseur bleu, avec le curseur vert, l'appui sur une touche d'avance 120 se trouvant sous la touche AUTO 116 amène automatiquement le curseur en un second emplacement. Le nombre de séquences de réglage est de préférence inférieur au nombre de zones de l'image. Dans l'exemple le nombre d'emplacements du curseur pour lesquels on effectue des réglages est de treize (13).

Lors de la première étape, des corrections sont effectuées sur l'ensemble des zones; à partir de la seconde étape des corrections sont effectuées sur l'ensemble des zones d'une moitié de l'image et ensuite sur des quarts d'image.

On a illustré sur la figure 15 les emplacements où apparaît successivement le couple de curseurs sur l'image 125 lorsqu'on effectue ce réglage en mode automatique :

Au point n° 1, au centre de l'image, le déplacement du curseur rouge (ou bleu) vers le curseur vert provoque un déplacement d'ensemble de l'image rouge (ou bleue), c'est-à-dire que cette première étape de réglage affecte la position de l'ensemble de l'image rouge (ou bleue).

Le point n° 2 est au centre de la demi-image supérieure. Les réglages effectués en ce point provoquent une correction d'amplitude et d'inclinaison de cette demi-image supérieure, c'est-à-dire règlent le grandissement et l'inclinaison des demi-images supérieures rouges et bleues par rapport à la demi-image correspondante verte.

Le point n° 3 est au centre de la demi-image inférieure. Les réglages sont les mêmes que pour le point n° 2 mais pour la demi-image inférieure.

Le point n° 4 est au centre de la demi-image droite. le réglage à ce stade affecte l'amplitude et l'inclinaison de cette demi-image droite.

Le point n° 5 est au centre de la demi-image gauche. En ce point on effectue le réglage d'amplitude et d'inclinaison pour la demi-image gauche.

Les points n° 6 et n° 7 se trouvent au milieu des bords respectivement supérieur et inférieur. Les réglages effectués en ces points corrigent la linéarité verticale et la courbure verticale des images rouge et bleue pour les demi-images respectivement supérieure et inférieure.

Le point n° 8 est au milieu du bord vertical droit et le point n° 9 au milieu du bord vertical gauche. En ces points les réglages effectués corrigent, pour les images rouge et bleue, la linéarité horizontale et la courbure horizontale pour les demi-images respectivement droite et gauche.

Enfin les points n° 10, 11, 12 et 13 se trouvent au quatre coins de l'image : haut-droit, haut-gauche, bas-gauche et bas-droit. Pour ces positions du curseur les corrections effectuées sont des corrections de trapèze horizontal et vertical pour les quarts d'image correspondants.

A chaque étape de réglage en mode automatique correspond un tableau de corrections qui se trouve en mémoire du microprocesseur 27, le tableau étant différent d'une étape à une autre. Le déplacement d'un pas du curseur rouge ou bleu par actionnement des touches 119, provoque le transfert, à chaque actionnement de touche $119_i$, d'une valeur incrément dans les emplacements correspondants de la mémoire 28 pour obtenir l'effet désiré, par exemple la translation de l'ensemble de l'image lors de la première étape du réglage. Autrement dit lors de la première étape du réglage l'actionnement des touches 119 provoque la modification des signaux de correction pour toutes les zones de l'image alors qu'en mode manuel cette correction n'affectait qu'une seule zone de l'image.

Dans chaque tableau les incréments, qui sont ajoutés ou retranchés aux valeurs correspondantes de la mémoire 28, sont codés sur huit bits dont un bit de signe, trois bits de partie entière et quatre bits de partie fractionnaire (après la virgule).

Les signaux dans les diverses mémoires étant de type numérique avec un nombre de bits limité, le résultat de chaque addition ou soustraction d'incrément dans chaque emplacement de la mémoire 28 est, dans le cas général, une valeur approchée par excès ou par défaut. L'approximation qui en résulte n'est pas gênante lors de l'addition ou de la soustraction d'un seul incrément; par contre si on ne prend pas de précaution, l'accumulation de ces approximations lorsqu'on ajoute ou retranche plusieurs incréments en succession peut provoquer des erreurs affectant la qualité du réglage. Pour éviter de telles erreurs on effectue, lors du réglage pas à pas, les additions et soustractions d'incréments de la façon suivante :

Le nombre N d'actionnements de chaque touche $119_i$ est mis en mémoire soit dans un compteur (non représenté) soit dans la mémoire du microprocesseur, soit dans la mémoire 28. On prévoit un comptage pour chaque direction (horizontale ou verticale) et pour cette direction le nombre N est augmenté d'une unité pour une action dans un sens et diminué d'une unité pour une action dans l'autre sens. Par exemple pour la direction verticale, le nombre N augmente quand on appuie sur la touche $119_1$ et diminue quand on appuie sur la touche $119_2$.

La valeur que l'on introduit dans la mémoire 28 pour la direction correspondante est ensuite calculée comme suit quand on a augmenté d'une unité la valeur N : à la valeur qui se trouvait dans la mémoire 28 on retranche N fois l'incrément et au résultat on ajoute N + 1 (ou N-1 en sens contraire) fois l'incrément. De cette manière l'imprécision ou erreur d'arrondi, est limitée à sa valeur minimum car on a évité l'accumulation des imprécisions.

Pour bien comprendre cet aspect de l'invention on donne ici un exemple numérique de type décimal pour la clarté de l'exposé : on considère le cas le plus simple où un incrément correspond à un pas de translation. Cet incrément a pour valeur 2,45; mais la mémoire 28 n'enregistre que les valeurs entières. Ainsi un pas dans la mémoire est enregistré à la valeur 2 et au bout de quatre pas, si on cumule successivement les pas on obtient la valeur 8 en mémoire alors que la valeur théorique correspond à 4 × 2,45 c'est-à-dire 9,90, soit pratiquement 10. On obtiendrait ainsi une erreur de deux unités dans la mémoire, ce qui est pratiquement inadmissible. Par contre avec le réglage exposé ci-dessus au bout du premier pas on enregistre effectivement 2 dans la mémoire, mais au second pas on enregistre : 2 - 2,45 = - 0,45

arrondi à 0 et à cette valeur on ajoute 2 × 2,45 = 4,90 arrondi à 5. Au troisième pas : 5 - 2 × 2,45 = 0,1 arrondi à 0 et on ajoute 3 × 2,45 = 7,35 c'est-à-dire 7; et au quatrième pas : 7 - 3 × 2,45 = - 0,35 arrondi à 0 et on ajoute 4 × 2,45 = 9,90 arrondi à 10, ce qui est très proche de la valeur réelle 9,90.

En d'autres termes à chaque pas on corrige l'erreur d'arrondi du pas précédent.

Ces calculs sont effectués sous la commande du microprocesseur 27. Ce procédé d'élimination des erreurs d'arrondi est aussi applicable au réglage en mode manuel.

Pour résumer le réglage en mode automatique on indique ici que le microprocesseur 27 effectue, à chaque étape du réglage les opérations suivantes : il envoie l'adresse du couple de curseurs; il décode les touches de déplacement 119 : direction horizontale ou verticale, augmentation ou diminution d'une unité de l'incrément; il consulte le tableau de réglage correspondant à l'étape, c'est-à-dire au numéro du point sur la figure 15, et, pour chaque zone, il effectue la modification dans la mémoire 28 selon la valeur de l'incrément. Enfin l'actionnement de la touche "avance" 120 permet de passer automatiquement au point de réglage suivant. Pour mémoire on rappelle ici que, lors de ce réglage en mode automatique, les mires 87 et 88 ne sont pas projetées sur l'écran.

Il peut arriver qu'en raison d'un positionnement défectueux des tubes par rapport à l'écran ou par une maladresse de manipulation le nombre de pas de réglage soit tellement important que la capacité de la mémoire 75 de l'interpolateur 29 (figure 10) soit dépassée. Dans ce cas le contenu de cette mémoire pourrait revenir à la valeur nulle et les réglages effectués antérieurement seraient perdus, le curseur revenant à une position extrême, ce qui pourrait être considéré par l'utilisateur comme un défaut du circuit de réglage de convergence. Pour remédier à cet inconvénient le microprocesseur 27 est programmé pour calculer à chaque pas d'incrémentation la valeur qui sera introduite dans la mémoire 75 et pour interdire l'incrémentation lorsque celle-ci conduirait au dépassement de la capacité de cette mémoire 75. En d'autres termes dans ce cas le curseur reste immobile, ce qui est une indication à l'utilisateur qu'il ne peut pas continuer le réglage et qu'il doit soit l'effectuer en sens inverse soit vérifier le positionnement des tubes par rapport à l'écran.

La position RAZ de remise à zéro du commutateur 114 (figure 14) permet de remettre à zéro, ou à une valeur déterminée le contenu dans chaque zone de la mémoire 28. Cette possibilité est particulièrement utile pour recommencer dès le départ toutes les opérations de réglage quand de tels réglages ont été effectués en mode manuel sur certaines zones, ce qui pourrait donner un aspect irrégulier à l'image.

Si, en mode automatique, on effectuait à chaque étape et à chaque pas un calcul pour toutes les zones qui doivent être modifiées le temps de réglage pourrait être important en raison du fonctionnement multiplexé de l'interpolateur 29. Ce temps est d'ailleurs augmenté par le temps du calcul effectué par le microprocesseur pour le contrôle du dépassement ou non de la capacité de la mémoire 75. C'est pourquoi le microprocesseur 27 est programmé pour, dans ce mode automatique, effectuer le réglage de la façon suivante :

Tant qu'on actionne une touche 119 le réglage, avec modification des valeurs dans la mémoire 28, n'est effectué que pour la zone correspondant au curseur et les zones immédiatement voisines, à la fois en direction verticale et horizontale, afin que le curseur conserve sa forme sur l'écran; et on met en mémoire le nombre de pas de réglage effectués. Lorsque l'utilisateur s'arrête d'appuyer pendant un temps déterminé, par exemple ¼ seconde, la correction à effectuer, qui dépend du nombre de pas enregistrés, est étendue à l'ensemble des zones concernées par cette étape du réglage, par exemple l'ensemble des zones quand on effectue le réglage au point n° 1 de la figure 15.

Bien entendu si on actionne de nouveau une touche 119 on recommence l'opération : correction uniquement sur les zones correspondant au curseur puis correction sur l'ensemble des zones concernées lorsque la touche n'a pas été actionnée pendant ledit temps déterminé.

Avec ce type de réglage le contrôle du dépassement de la capacité de la mémoire 75 de l'interpolateur 29 n'est effectuée qu'après l'arrêt d'une ¼ seconde d'actionnement de la touche 119; et si on constate, par le calcul dans le microprocesseur, que la capacité de la mémoire 75 pourrait être dépassée, on n'introduit dans cette dernière qu'un nombre d'incréments correspondant au maximum qu'elle peut accepter.

Le circuit de réglage peut être livré à l'utilisateur avec une mémoire 28 sans contenu. Il est aussi possible d'introduire en usine, dans les divers emplacements (correspondant aux zones de l'image) de cette mémoire 28, des valeurs qui correspondent à des réglages moyens, par exemple pour une inclinaison déterminée moyenne du plan des trois axes des tubes par rapport au plan vertical de l'écran et pour des angles moyens d'inclinaison des tubes rouge et bleu par rapport au tube central vert. Dans ce cas il est avantageux que, lorsque le commutateur 114 est installé dans la position RAZ (figure 14), on ne vide pas la mémoire 28 mais on revienne aux valeurs de préréglage.

Il est à noter aussi que le circuit de réglage de convergence et de géométrie de l'invention peut être utilisé non seulement pour le réglage par l'utilisateur mais également lors de la fabrication pour des contrôles de qualité.

Habituellement les tensions continues d'alimentation des divers composants électroniques sont produites à partir de l'alimentation THT. Il en est ainsi de la tension de référence unique utilisée pour les convertisseurs numériques-analogiques 22, 23. Il est important que cette tension de référence reste constante ou garde une valeur permettant de conserver toujours le même effet sur le faisceau d'électrons. Or, lorsque la puissance fournie par la THT augmente, la tension d'accélération du faisceau d'électrons diminue et l'efficacité des déviateurs de convergence devient plus grande, ce qui modifie le réglage. Pour remédier à cet inconvénient on prévoit un circuit de régulation qui diminue la tension de référence des convertisseurs numériques-analogiques lorsque la puissance THT augmente.

Pour éviter une erreur de manipulation du boîtier de télécommande 110 après que les réglages aient été effectués on prévoit sur le bâti un commutateur qui, quand il est dans une position déterminée, inhibe l'action des touches 113.

## Revendications

1. Dispositif de réglage de convergence pour vidéoprojecteur en couleurs à trois tubes monochromes (11, 12, 13) projetant chacun une image d'une couleur déterminée sur un écran (9), ce dispositif, de type numérique, agissant sur le balayage des deuxième (12) et troisième (13) tubes pour superposer, sur l'écran, leurs images à celle du premier tube (11) et comprenant une mémoire vive (28) dans laquelle sont stockées des valeurs de correction correspondant à des corrections des courants de balayage pour les diverses zones en laquelle est divisée l'image, ces valeurs étant restituées en synchronisme avec le balayage des zones lors du fonctionnement normal, et un moyen de calcul pour, lors de la phase de réglage, modifier les valeurs en mémoire en fonction des ordres émis par l'utilisateur qui effectue ce réglage par zone ou groupe de zones par observation de l'image, caractérisé en ce qu'il comprend un moyen (27) pour imposer une séquence d'étapes (figure 15) de réglage se succédant selon un ordre déterminé, les signaux de correction de toutes les zones étant modifiés simultanément dans la mémoire au cours de la première étape grâce à un tableau de corrections en mémoire du microprocesseur (27), le nombre de zones de l'image affectées par la correction au cours des étapes suivantes allant ensuite en décroissant, le nombre total des étapes étant cependant inférieur au nombre de zones de l'image.

2. Dispositif selon la revendication 1, caractérisé en ce que qu'il comporte: un générateur (92) pour faire projeter par le premier tube (11) un curseur (86) et, pour chacun des deux autres tubes (12, 13), un second curseur (85) de la même forme et un moyen (114) pour commander le déplacement de ce second curseur, afin de l'amener en coïncidence avec le curseur du premier tube et modifier, sous la commande du moyen de calcul (27), le contenu de la mémoire en fonction du déplacement.

3. Dispositif selon la revendication 2, caractérisé en qu'il comprend un moyen (93) pour projeter simultanément aux curseurs deux mires (87, 88), en principe identiques, et formées de traits horizontaux et verticaux correspondant à la division de l'image en zones, ces mires, qui ont des couleurs correspondant aux couleurs respectives des curseurs, ayant une brillance inférieure à celle de ces derniers.

4. Dispositif selon la revendication 2 ou 3, caractérisé en ce que la première étape consiste à observer au centre de l'écran la superposition des curseurs (85) des seconde et troisième couleurs avec le curseur (87) de la première couleur, les valeurs de correction correspondantes en mémoire étant des translations d'ensemble des images des seconde et troisième couleurs.

5. Dispositif selon la revendication 2 ou 4, caractérisé en ce que, pour limiter le temps de réglage, lors de la commande du déplacement du curseur (85), seule la zone contenant ce curseur et, éventuellement, les zones immédiatement voisines est (ou sont) affectée(s) de signaux de correction, les signaux de correction des autres zones concernées par l'étape de réglage n'étant mis en mémoire (28) qu'après ce déplacement.

6. Dispositif selon la revendication 5, caractérisé en ce que la mise en mémoire de l'ensemble des signaux de correction fournis par le microprocesseur pour toutes les zones concernées par l'étape de réglage, est effectuée après un temps déterminé, par exemple de l'ordre d'une demi-seconde, après la dernière commande de déplacement du curseur.

7. Dispositif selon la revendication 1, caractérisé en ce que le réglage pouvant également être effectué par zones, le réglage d'une zone affectant les signaux de correction pour cette zone uniquement, il comporte un moyen (10) pour sélectionner le mode de réglage: zone par zone, ou groupe de zones par groupe de zones.

8. Dispositif selon la revendication 1, caractérisé en ce que chaque signal de correction est modifié par incréments.

9. Dispositif selon l'une quelconque des revendications précédentes, caractérisé en ce que dans la mémoire (28) sont stockés, au cours de la fabrication, des signaux de correction correspondant à des valeurs moyennes de correction, le réglage consistant à modifier ces valeurs introduites dans la mémoire (28), ces dernières étant cependant conservées dans une autre zone de la mémoire pour permettre de revenir aux signaux de correction préenregistrés.

10. Dispositif selon la revendication 2, caractérisé en ce qu'un moyen (119) est prévu pour commander le déplacement du curseur (85) par pas, l'avance d'un pas correspondant à l'augmentation d'un incrément de chaque signal de correction dans la zone, ou le groupe de zones, concerné(e) par le réglage.

11. Dispositif selon la revendication 10, caractérisé en ce qu'à chaque pas de déplacement du curseur chaque signal de correction dans la mémoire est modifié de la façon suivante, afin de limiter au minimum l'imprécision sur ce signal: au signal de correction qui se trouvait en mémoire avant le déplacement d'un pas, on retranche n fois l'incrément, n'étant le nombre algébrique de pas effectués depuis le début du réglage et au résultat de cette soustraction on ajoute n+1 ou n−1 incréments selon le sens de déplacement du curseur.

12. Dispositif selon l'une quelconque des revendications précédentes, caractérisé en ce qu'il comprend, pour lisser les signaux de correction entre zones voisines en direction verticale, un moyen (29) d'interpolation linéaire des signaux de correction de façon que, dans chaque zone, les signaux de correction varient linéairement de ligne à ligne et que les signaux de deux lignes contiguës correspondant à des zones différentes aient des valeurs peu différentes.

13. Dispositif selon la revendication 12, caractérisé en ce que les signaux de correction pour chaque colonne sont définis par une valeur initiale ($V_e$) pour la zone correspondant à la période de retour trame et, pour les autres zones par le taux de variation des signaux de correction.

14. Dispositif selon la revendication 13, caractérisé en ce que pour modifier les signaux de correction dans une zone on modifie ledit taux, une modification ($\Delta V_e$) de même valeur mais de signe contraire étant effectuée sur le taux d'une zone voisine de la même colonne.

15. Dispositif selon la revendication 13, caractérisé en ce que, pour modifier d'une même quantité les signaux de correction sur une colonne, on modifie la valeur initiale dans la zone de retour trame.

16. Dispositif selon l'une quelconque des revendications 13 à 15, caractérisé en ce que l'interpolateur linéaire comporte un intégrateur à mémoire (75) et un additionneur (76) commandés de façon multiplexée de façon que cette mémoire et cet additionneur soient communs à toutes les zones et à tous les signaux de correction.

17. Dispositif de réglage selon l'une quelconque des revendications précédentes, caractérisé en ce que la courbe de réponse (figure $9_b$) des amplificateurs des signaux de correction et des bobinages de balayage recevant ces signaux de correction amplifiés est telle qu'elle permet le lissage des signaux de correction d'une zone à une autre en direction horizontale.

18. Dispositif selon l'une quelconque des revendications précédentes, caractérisé en ce que pour diviser l'image en zones, il comporte un générateur d'adresses (26) qui comporte un générateur (64) d'impulsions de fréquence 1 MHz synchronisées au balayage et au moins un diviseur (65, 68) de fréquence à sorties parallèles, ces dernières étant divisées en deux groupes, un premier groupe représentant, selon son état, l'adresse horizontale de la zone et le second groupe, à fréquence moins élevée, représentant selon son état l'adresse verticale de la zone.

19. Dispositif selon la revendication 18, caractérisé en ce que chaque zone contenant quatre signaux de correction: deux pour la direction: horizontale ou verticale, et deux pour la couleur, par exemple rouge ou bleue, les deux premières sorties ($65_0$, $65_1$) du diviseur dont les fréquences sont les plus élevées commandent selon leur état la lecture (ou la modification) du type de signal de correction à lire ou modifier.

20. Dispositif selon la revendication 18 ou 19, caractérisé en ce que le générateur d'adresses (26) comporte deux diviseurs, l'un (65) pour engendrer les signaux d'adresses des zones en direction horizontale et l'autre (68), alimenté par le premier diviseur, pour engendrer les signaux d'adresses en direction verticale, ce second diviseur étant programmable en fonction du standard de façon à modifier le nombre de lignes dans chaque zone verticale en proportion du nombre de lignes du standard.

21. Dispositif selon la revendication 13, caractérisé en ce que, pour la commande de visualisation, on prévoit un moyen sensible au standard pour, lors d'un changement de standard, modifier la valeur initiale de chaque colonne dans le même rapport qu'est modifié le nombre de lignes du standard et pour modifier dans le rapport inverse les valeurs des signaux de correction sortant de la mémoire.

22. Dispositif selon la revendication 21, caractérisé en ce que ladite modification des signaux dans le rapport inverse du nombre de lignes de standard est effectuée par modification du gain d'amplificateurs et/ou des tensions de référence de convertisseurs numériques-analogiques (22, 23) des signaux sortant de la mémoire.

23. Dispositif selon l'une quelconque des revendications précédentes, caractérisé en ce que les signaux de correction sont appliqués à des bobinages auxiliaires (14, 15) de correction de convergence ou de géométrie des deuxième et troisième tubes.

24. Dispositif selon l'une quelconque des revendications précédentes, caractérisé en ce que chaque trame est découpée en direction horizontale en seize zones d'égales longueurs et, en direction verticale en treize zones d'égales longueurs au moins pour celles visibles sur l'écran.

25. Dispositif selon la revendication 23, caractérisé en ce que le premier tube comporte également des bobinages auxiliaires ($14_v$ et $15_v$) auxquels sont appliqués les signaux de correction de géométrie en même temps qu'aux bobinages auxiliaires des deux autres tubes.

26. Dispositif selon la revendication 25, caractérisé en ce qu'il comporte un circuit (18) de correction de géométrie réglable par l'utilisateur pour effectuer une correction d'amplitude verticale de linéarité verticale et de trapèze horizontal par l'action sur les déviateurs auxiliaires des trois tubes.

27. Dispositif selon la revendication 26, caractérisé en ce que, pour effectuer lesdites corrections de géométrie, l'utilisateur modifie un seul signal ($V_{cont}$).

28. Dispositif selon la revendication 27, caractérisé en ce qu'il comporte un intégrateur (51) d'un signal à fréquence trame dont la valeur initiale est réglable par l'utilisateur et dont le signal de sortie est utilisé pour effectuer lesdites corrections d'amplitude verticale et la correction de trapèze horizontal ainsi qu'un second intégrateur (54) alimenté par le signal de sortie du premier intégrateur (51) pour commander la correction de linéarité en direction verticale.

15

29. Dispositif selon l'une quelconque des revendications précédentes, caractérisé en ce qu'il comporte un boîtier de télécommande (110), par exemple du type à infrarouges, présentant à la fois des touches pour les fonctions habituelles d'un récepteur de télévision et des touches (113) pour le réglage.

30. Dispositif selon les revendications 2 et 29, caractérisé en ce que le boîtier de télécommande (110) comporte quatre touches de commande de déplacement du curseur, une touche (119$_1$) pour le déplacement vertical vers le bas, une touche (119$_2$) pour le déplacement vertical vers le haut, une touche (119$_3$) pour le déplacement horizontal vers la gauche et une touche (119$_4$) pour le déplacement horizontal vers la droite.

31. Dispositif selon les revendications 27 et 28, caractérisé en ce que le boîtier de télécommande (110) comporte une seule touche (130) pour la correction de géométrie.

32. Dispositif selon la revendication 16, caractérisé en ce que, avant l'incrémentation de la mémoire (75) de l'interpolateur linéaire, le microprocesseur (27) détermine si la capacité de la mémoire risque d'être dépassée à l'issue de cette incrémentation et interdit cette dernière si celle-ci aurait pour effet d'entrainer le dépassement de capacité de la mémoire.

## Claims

1. A convergence adjusting device for a colour TV projector including three monochrome tubes (11, 12, 13) each projecting one image of a given colour onto a screen (9), the device, of the digital type, acting on the scan units of the second (12) and third tube (13) in order to superimpose on the screen their images to that of the first tube (11), said device comprising a read/write memory (28) in which correction values corresponding to corrections of the scanning current for the different zones are stored, into which the image is subdivided, these values being read out synchroneously with the scanning of the zones during normal operation, and a computer means conceived to modify during the adjustment phase the stored values in accordance with the instructions given by the user who performs this adjustment zone after zone or group of zones after group of zones by looking at the image, characterized in that it comprises a means (27) for imposing a sequence of adjustment steps (Figure 15) which are performed in a given order, the correction signals of all the zones being modified simultaneously in the memory during the first step due to a correction table stored in the microprocessor (27), the number of image zones concerned by the correction during the later steps decreasing steadily with the total number of steps remaining, however, below the number of image zones.

2. A device according to claim 1, characterized in that it comprises: a generator (92) conceived to project a cursor (86) by the first tube (11) and a second cursor (85) of the same shape by each one of the other two tubes (12, 13), and a means (114) for controlling the displacement of this second cursor in order to achieve coincidence with the cursor of the first tube and to modify the contents of the memory in accordance with the displacement under control by the computer means (27).

3. A device according to claim 2, characterized in that it comprises a means (93) for projecting simultaneously with the cursors two gratings (87, 88) of generally identical shape, these gratings being formed by horizontal and vertical lines corresponding to the subdivision of the image into zones, these gratings having colours corresponding to the respective colours of the cursors and a reduced brightness with respect to these latters.

4. A device according to claim 2 or 3, characterized in that the first step consists in observing in the center of the screen the coincidence of the cursors (85) of the second and third colour with the cursor (87) of the first colour, the stored corresponding correction values being transpositions of the second and third colour images taken together.

5. A device according to claim 2 or 4, characterized in that, in view of a limitation of the adjustment time, only the zone containing this cursor and, as the case may be, the immediately adjacent zones is (or are) affected by the correction signals during the control of the displacement of the cursor (85), the correction signals of the other zones concerned by the adjustment step being stored in the memory (28), only after this displacement.

6. A device according to claim 5, characterized in that the storing of the set of correction signals supplied by the microprocessor for all the zones concerned by the adjustment step is performed after a predetermined time duration, for example of about half a second consecutive to the last cursor displacement control action.

7. A device according to claim 1, characterized in that, the adjustment being possible also zone by zone, the adjustment of one zone affecting the correction signals for this zone only, the device comprises a means (10), for selecting the adjustment mode, either zone by zone or group of zones by group of zones.

8. A device according to claim 1, characterized in that each correction signal is modified by increments.

9. A device according to any one of the preceding claims, characterized in that during the manufacture, correction signals corresponding to mean correction values are stored in the memory (28), the adjustment consisting in modifying these values inscribed in the memory (28), these original values being however conserved in another zone of the memory in order to be able to return to the initially inscribed correction signals.

10. A device according to claim 2, characterized in that a means (119) is provided for a stepwise control of the displacement of the cursor (85), the advance by one step corresponding to the addition of one increment to each correction signal in the zone or group of zones concerned by the adjustment.

11. A device according to claim 10, characterized in that during each cursor displacement step, each correction signal in the memory is modified in the following way in order to restrict the uncertaincy of this signal to a minimum: from the correction signal stored in the memory prior to the displacement by one step, the increment is subtracted n times, n being the algebraic number of steps performed since the beginning of the adjustment, and to the result of this subtraction n+1 or n−1 increments are added according to the direction of displacement of the cursor.

12. A device according to any one of the preceding claims, characterized in that, in order to smooth the correction signals between adjacent zones in vertical direction, it comprises a linear interpolation means (29) for the correction signals, such that in each zone the correction signals vary linearily from line to line and that the signals of two adjacent lines corresponding to different zones show only slightly different values.

13. A device according to claim 12, characterized in that the correction signals for each column are defined by an initial value $(V_e)$ for the zone corresponding to the frame return period, whereas they are defined for the other zones by the correction signal variation rate.

14. A device according to claim 13, characterized in that, in order to modify the correction signals in a zone, said rate is modified, a modification $(\Delta V_e)$ of equal value but of inverted sign being performed on the rate in an adjacent zone of this very column.

15. A device according to claim 13, characterized in that, in order to modify the correction signals in a column by a same quantity, the initial value is modified in the frame return zone.

16. A device according to any one of claims 13 to 15, characterized in that the linear interpolator comprises a memory type integrator (75) and an adder (76), both controlled in a multiplex fashion such that this integrator and this adder are associated to all the zones and all the correction signals.

17. An adjustment device according to any one of the preceding claims, characterized in that the transfer function (Figure 9b) of the correction signal amplifiers and the scanning coils receiving these amplified correction signals is such that it allows to smoothen the correction signals from one zone to another in horizontal direction.

18. A device according to any one of the preceding claims, characterized in that in order to divide the image into zones, the device comprises an address generator (26) including a generator (64) for producing one-MHz frequency pulses which are synchronized to the scanning pulses, and at least one frequency divider (65, 68) having parallell outputs, which are divided into two groups, a first group representing, according to its switching state, the horizontal address of the zone and the second group of a lower frequency representing, according to its switching state, the vertical address of the zone.

19. A device according to claim 18, characterized in that each zone containing four correction signals, two for the direction (horizontal or vertical) and two for the colour (for example red or blue), the two first outputs $(65_0, 65_1)$ of highest frequency of the divider controlling, according to their switching state, the read-out or modification of the type of correction signal to be read or modified.

20. A device according to claim 18 or 19, characterized in that the address generator (26) includes two dividers, one (65) for producing the address signals of the zones in horizontal direction, and the other (68), which is fed by the first divider, for producing the address signals in vertical direction, this second divider being a programmable divider in accordance with the TV standard in order to modify the number of lines of each vertical zone proportionally to the number of lines of the TV standard.

21. A device according to claim 13, characterized in that, for the display control, a means dependent on the TV standard is provided in order to modify at each TV standard change the initial value of each column by the same rate by which the number of lines of the TV standard is changed, and to modify by the inverted rate the values of the correction signals delivered by the memory.

22. A device according to claim 21, characterized in that said modification of the signals by the inverted rate of the number of lines of the TV standard is performed by modifying the gain of the amplifiers and/or the reference voltages of the D-A converters (22, 234) for converting the signals delivered by the memory.

23. A device according to any one of the preceding claims, characterized in that the correction signals are applied to auxiliary coils (14, 15) conceived to correct the convergence or the geometry of the second and third tubes.

24. A device according to any one of the preceding claims, characterized in that each frame is cut in horizontal direction into sixteen zones of even lengths and in vertical direction into thirteen zones of equal lengths at least for those zones which can be seen on the screen.

25. A device according to claim 23, characterized in that the first tube comprises also auxiliary coils $(14_V$ and $15_V)$ to which the geometry correction signals are applied at the same time as to the auxiliary coils of the two other tubes.

26. A device according to claim 25, characterized in that it comprises a geometry correction circuit (18) which can be adjusted by the user in order to perform a vertical amplitude correction, a vertical linearity correction and a horizontal keystone correction, this circuit acting on the auxiliary coils of the three tubes.

27. A device according to claim 26, characterized in that in order to perform said geometry corrections, the user modifies only one signal ($V_{cont}$).

28. A device according to claim 27, characterized in that it comprises an integrator (51) for integrating a frame frequency signal whose initial value may be adjusted by the user, the output signal of the integrator being used to perform said vertical amplitude correction and horizontal keystone correction, as well as a second integrator (54) fed by the output signal of the first integrator (51) and intended to control the linearity correction in vertical direction.

29. A device according to any one of the preceding claims, characterized in that it comprises a remote control unit (110) for example of the infrared type, presenting both keys for the conventional functions of a TV receiver and adjustment keys (113).

30. A device according to claims 2 and 29, characterized in that the remote control unit (110) comprises four keys for controlling the cursor displacement, one key ($119_1$) for its vertical downwards displacement, one key ($119_2$) for its vertical upwards displacement, one key ($119_3$) for its horizontal displacement to the left and one key ($119_4$) for its horizontal displacement to the right.

31. A device according to claims 27 and 28, characterized in that the remote control unit (110) comprises only one key (113) for the geometry correction.

32. A device according to claim 16, characterized in that prior to the incrementation of the memory (75) in the linear interpolator, the microprocessor (27) determines if this incrementation may exceed the capacity of the memory and forbids this incrementation, if thereby the capacity of the memory would be overstepped.

## Patentansprüche

1. Konvergenzregelvorrichtung für einen Farbvideoprojektor mit drei monochromen Röhren (11, 12, 13), die je ein Bild einer bestimmten Farbe auf einen Bildschirm (9) projizieren, wobei die Vorrichtung digital ausgebildet ist und auf die Ablenkung der zweiten (12) und dritten Röhre (13) einwirkt, um auf dem Bildschirm deren Bilder dem Bild der ersten Röhre (11) zu überlagern, wobei die Vorrichtung einen Aktivspeicher (28) zur Speicherung von Korrekturwerten, die den Ablenkstrom-Korrekturen für die verschiedenen Zonen entsprechen, in die das Bild eingeteilt ist, und zur Wiedergabe dieser Werte synchron mit der Abtastung der Zonen während des Normalbetriebs, und ein Rechenorgan aufweist, um während der Regelphase die gespeicherten Werte abhängig von den vom Benutzer gegebenen Befehlen zu verändern, wobei der Benutzer die Regelung zonenweise oder zonengruppenweise unter Beobachtung des Bildes durchführt, dadurch gekennzeichnet, daß die Vorrichtung ein Mittel (27) aufweist, um eine Folge von Regelschritten (Figur 15) ablaufen zu lassen, die in einer gegebenen Reihenfolge ablaufen, wobei die Korrektursignale aller Zonen gleichzeitig im Speicher während des ersten Schritts aufgrund einer im Speicher des Mikroprozessors (27) gespeicherten Korrekturtabelle geändert werden und die Anzahl der durch die Korrektur betroffenen Bildzonen während der nachfolgenden Schritte stetig abnimmt, wobei jedoch die Gesamtzahl von Korrekturschritten geringer als die Zahl der Zonen des Bildes ist.

2. Vorrichtung nach Anspruch 1, dadurch gekennzeichnet, daß sie einen Generator (92) zur Projektion eines Kursors (86) durch die erste Röhre und zur Projektion eines zweiten Kursors (85) gleicher Form durch die beiden anderen Röhren (12, 13) und ein Mittel (114) aufweist, um die Verschiebung dieses zweiten Kursors zu steuern, bis er mit dem Kursor der ersten Röhre zusammenfällt, worauf aufgrund einer Steuerung durch das Rechenorgan (27) der Inhalt des Speichers in Abhängigkeit von der Kursorverschiebung verändert wird.

3. Vorrichtung nach Anspruch 2, dadurch gekennzeichnet, daß sie ein Mittel (93) zur mit den Kursoren gleichzeitig erfolgenden Projektion zweier im Prinzip gleicher Netze (87, 88) aufweist, wobei diese Netze aus waagrechten und senkrechten, der Aufteilung des Bilds in Zonen entsprechenden Linien gebildet werden, dieselben Farben wie die entsprechenden Farben der Kursoren und eine geringere Helligkeit als die Kursoren besitzen.

4. Vorrichtung nach Anspruch 2 oder 3, dadurch gekennzeichnet, daß der erste Schritt darin besteht, im Zentrum des Bildschirms die Überlagerung der Kursoren (85) der zweiten und dritten Farbe mit dem Kursor (87) der ersten Farbe zu beobachten, wobei die entsprechenden Korrekturwerte im Speicher Translationen der Gesamtheit der Bilder der zweiten und dritten Farbe sind.

5. Vorrichtung nach Anspruch 2 oder 4, dadurch gekennzeichnet, daß zur Begrenzung der Regeldauer während der Steuerung der Verschiebung des Kursors (85) nur die diesen Kursor enthaltende Zone und ggfs. die unmittelbar benachbarten Zonen von den Korrektursignalen betroffen ist bzw. sind und daß die Korrektursignale der anderen von dem Regelschritt betroffenen Zonen erst nach dieser Verschiebung in den Speicher (28) gebracht werden.

6. Vorrichtung nach Anspruch 5, dadurch gekennzeichnet, daß die Einspeicherung der Gesamtheit der vom Mikroprozessor für alle durch den Regelschritt betroffenen Zonen gelieferten Korrektursignalen nach einer vorgegebenen Zeitdauer erfolgt, beispielsweise eine halbe Sekunde nach der letzten Steuerung einer Kursorverschiebung.

7. Vorrichtung nach Anspruch 1, dadurch gekennzeichnet, daß im Fall einer Regelung, die auch zonenweise erfolgen kann, wobei die Regelung einer Zone nur die Korrektursignale für diese Zone betrifft, ein Mittel (10) vorgesehen ist, um den Regelmodus auszuwählen, nämlich Zone für Zone oder Zonengruppe für Zonengruppe.

8. Vorrichtung nach Anspruch 1, dadurch gekennzeichnet, daß jedes Korrektursignal in Inkrementen verändert wird.

9. Vorrichtung nach einem beliebigen der vorhergehenden Ansprüche, dadurch gekennzeichnet, daß im Speicher (28) während der Herstellung Korrektursignale entsprechend mittleren Korrekturwerten gespeichert werden, wobei die Regelung darin besteht, die in den Speicher (28) eingeschriebenen Werte zu verändern, und wobei jedoch diese Ursprungswerte in einer anderen Speicherzone erhalten bleiben, damit auf diese vorab gespeicherten Korrektursignale zurückgegriffen werden kann.

10. Vorrichtung nach Anspruch 2, dadurch gekennzeichnet, daß ein Mittel (119) vorgesehen ist, um die Verschiebung des Kursors (85) in Schritten zu steuern, wobei ein Schritt vorwärts der Vergrößerung jedes Korrektursignals in der durch die Regelung betroffenen Zone oder Gruppe von Zonen um ein Inkrement entspricht.

11. Vorrichtung nach Anspruch 10, dadurch gekennzeichnet, daß mit jedem Kursorverschiebeschritt jedes Korrektursignal im Speicher auf folgende Weise verändert wird, um die Ungenauigkeit dieses Signals möglichst zu begrenzen: Vom Korrektursignal, das sich vor der Verschiebung um einen Schritt im Speicher befand, wird das Inkrement n-mal abgezogen, wobei n die algebraische Summe von seit dem Beginn der Regelung durchgeführten Schritten ist, und dann werden dem Ergebnis dieser Subtraktion n+1 oder n−1 Inkremente hinzugefügt, je nach der Schieberichtung des Kursors.

12. Vorrichtung nach einem der vorhergehenden Ansprüche, dadurch gekennzeichnet, daß zum Glätten der Korrektursignale zwischen in senkrechter Richtung benachbarten Zonen ein Mittel (29) zur linearen Interpolation der Korrektursignale vorgesehen ist, derart, daß in jeder Zone die Korrektursignale linear von Zeile zu Zeile variieren und daß die Signale zweier benachbarter Zeilen, die unterschiedlichen Zonen angehören, nur wenig voneinander abweichende Werte haben.

13. Vorrichtung nach Anspruch 12, dadurch gekennzeichnet, daß die Korrektursignale für jede Spalte durch einen Ursprungswert ($V_e$) für die Zone definiert sind, die der Bildaustastdauer entspricht, während sie für die anderen Zonen durch den Variationsgrad der Korrektursignale definiert werden.

14. Vorrichtung nach Anspruch 13, dadurch gekennzeichnet, daß zur Veränderung der Korrektursignale in einer Zone dieser Variationsgrad verändert wird, während eine Veränderung um denselben Wert ($\Delta V_e$), aber entgegengesetzten Vorzeichens bezüglich des Variationsgrads einer der gleichen Spalte benachbarten Zone durchgeführt wird.

15. Vorrichtung nach Anspruch 13, dadurch gekennzeichnet, daß zur Veränderung der Korrektursignale in einer Spalte um einen gleichen Wert der Ursprungswert in der Bildaustastzone verändert wird.

16. Vorrichtung nach einem beliebigen der Ansprüche 13 bis 15, dadurch gekennzeichnet, daß zur linearen Interpolation ein Integrator (75) mit Speichereffekt und ein Addierer (76) vorgesehen sind, die im Zeitmultiplex so gesteuert werden, daß dieser Integrator und der Addierer für alle Zonen und alle Korrektursignale gemeinsam verwendet werden.

17. Regelvorrichtung nach einem beliebigen der vorhergehenden Ansprüche, dadurch gekennzeichnet, daß die Übertragungsfunktion (Figur 9b) der Korrektursignalverstärker und der diese verstärkten Korrektursignale empfangenden Ablenkspulen so gewählt ist, daß sich eine Glättung der Korrektursignale von einer Zone zur nächsten in waagrechter Richtung ergibt.

18. Vorrichtung nach einem beliebigen der vorhergehenden Ansprüche, dadurch gekennzeichnet, daß zur Aufteilung des Bilds in Zonen ein Adressengenerator (26) vorgesehen ist, der einen Impulsgenerator (64) zur Erzeugung von mit der Ablenkung synchronisierten Impulsen einer Frequenz von 1 MHz und mindestens einen Frequenzteiler (65, 68) mit parallelen Ausgängen aufweist, wobei letztere in zwei Gruppen eingeteilt sind, nämlich eine erste Gruppe, die je nach ihrem Schaltzustand die Horizontaladresse der Zone angibt, und eine zweite Gruppe mit niedrigerer Frequenz, die je nach ihrem Schaltzustand die Vertikaladresse der Zone angibt.

19. Vorrichtung nach Anspruch 18, dadurch gekennzeichnet, daß im Fall von vier Korrektursignalen für jede Zone, nämlich zwei für die waagrechte oder senkrechte Richtung und zwei für die Farbe, z.B. rot oder blau, die beiden Teilerausgänge ($65_0$, $65_1$) mit den höchsten Frequenzen gemäß ihrem Schaltzustand das Auslesen (oder die Veränderung) der Art des zu lesenden oder zu verändernden Korrektursignals steuern.

20. Vorrichtung nach Anspruch 18 oder 19, dadurch gekennzeichnet, daß der Adressengenerator (26) zwei Teiler aufweist, von denen der eine (65) zur Erzeugung der Zonenadressensignale in waagrechter Richtung und der andere (68), der vom ersten Teiler gespeist wird, zur Erzeugung der Adressensignale in senkrechter Richtung vorgesehen ist, wobei dieser zweite Teiler abhängig von der Fernsehnorm programmierbar ist, so daß die Anzahl der Zeilen jeder senkrechten Zone proportional zur Anzahl der Zeilen der Norm verändert werden kann.

21. Vorrichtung nach Anspruch 13, dadurch gekennzeichnet, daß für die Anzeigesteuerung ein für die Fernsehnorm empfindliches Mittel vorhanden ist, um im Fall einer Normänderung den Ursprungswert jeder Zeile im selben Verhältnis zu ändern, wie die Normzeilenzahl geändert wird, und um im umgekehrten Verhältnis die Korrektursignalwerte zu ändern, die aus dem Speicher ausgegeben werden.

22. Vorrichtung nach Anspruch 21, dadurch gekennzeichnet, daß die Veränderung der Signale im umgekehrten Verhältnis zur Normzeilenzahl durch Veränderung des Verstärkungsgrads des Verstärkers und/oder der Bezugsspannungen von Digital-Analogwandlern (22, 23) erfolgt, über die die aus dem Speicher kommenden Signale umgewandelt werden.

23. Vorrichtung nach einem beliebigen der vorhergehenden Ansprüche, dadurch gekennzeichnet, daß die Korrektursignale an Hilfsspulen (14, 15) zur Konvergenzkorrektur oder Geometriekorrektur der zweiten und dritten Röhre angelegt sind.

24. Vorrichtung nach einem beliebigen der vorhergehenden Ansprüche, dadurch gekennzeichnet, daß jedes Halbbild in waagrechter Richtung in sechzehn gleich lange Zonen und in senkrechter Richtung in dreizehn gleich lange Zonen zumindest für die auf dem Bildschirm sichtbaren Zonen unterteilt ist.

25. Vorrichtung nach Anspruch 23, dadurch gekennzeichnet, daß die erste Röhre auch Hilfsspulen (14v und 15v) besitzt, an die die Geometriekorrektursignale zur gleichen Zeit wie an die Hilfsspulen der beiden anderen Röhren angelegt sind.

26. Vorrichtung nach Anspruch 25, dadurch gekennzeichnet, daß sie einen durch den Benutzer regelbaren Geometriekorrekturkreis (18) zur Korrektur der Vertikalamplitude, der Vertikallinearität und der horizontalen Trapezform enthält, wobei dieser Korrekturkreis auf die Hilfsspulen der drei Röhren einwirkt.

27. Vorrichtung nach Anspruch 26, dadurch gekennzeichnet, daß zur Geometriekorrektur der Benutzer ein einziges Signal ($V_{cont}$) verändert.

28. Vorrichtung nach Anspruch 27, dadurch gekennzeichnet, daß sie einen Integrator (51) enthält, der ein Signal mit Halbbildfrequenz integriert, dessen Anfangswert vom Benutzer einstellbar ist und dessen Ausgangssignal zur Korrektur der Vertikalamplitude und der horizontalen Trapezverzeichnung verwendet wird, während ein zweiter Integrator (54), der vom Ausgangssignal des ersten Integrators (51) gespeist wird, zur Steuerung der Linearitätskorrektur in senkrechter Richtung verwendet wird.

29. Vorrichtung nach einem beliebigen der vorhergehenden Ansprüche, dadurch gekennzeichnet, daß sie eine Fernsteuerung (110) beispielsweise vom Infrarottyp besitzt, die sowohl Tasten für die üblichen Steuerfunktionen eines Fernsehempfängers als auch Tasten (113) für die Regelung aufweist.

30. Vorrichtung nach den Ansprüchen 2 und 29, dadurch gekennzeichnet, daß die Fernsteuerung (110) vier Steuertasten zur Verschiebung des Kursors, nämlich eine Taste (119₁) zur vertikalen Verschiebung nach unten, eine Taste (119₂) für die Vertikalverschiebung nach oben, eine Taste (119₃) für die Horizontalverschiebung nach links und eine Taste (119₄) für die Horizontalverschiebung nach rechts besitzt.

31. Vorrichtung nach den Ansprüchen 27 und 28, dadurch gekennzeichnet, daß die Fernsteuerung (110) eine einzige Taste (130) für die Geometriekorrektur enthält.

32. Vorrichtung nach Anspruch 16, dadurch gekennzeichnet, daß vor der Inkrementierung des Speichers (75) des Linearinterpolators der Mikroprozessor (27) festlegt, ob die Kapazität des Speichers möglicherweise mit dieser Inkrementierung überschritten wird, und diese verbietet, wenn sie zu einer Überschreitung der Speicherkapazität führen würde.

# FIG_1

FIG_2

EP 0 194 944 B1

FIG_3

FIG_4

EP 0 194 944 B1

# FIG_5

FIG_6-a

FIG_6-b

FIG_6-c

FIG_6-d

FIG_6-e

FIG_6-f

# FIG_7

Comparateur

HM, VM

Curseur

Mire

$A_2 \cdots A_g$

$A_1$
$A_6$

# FIG_8

RB V

# FIG_10

EP 0 194 944 B1

FIG_9-a

FIG_9-b

FIG_11-a

FIG_11-b

FIG_11-c

FIG_11-d

FIG_11-e

FIG_11-f

FIG_12

EP 0 194 944 B1

FIG_13

EP 0 194 944 B1

# FIG_14

114
N  RAZ 525 625  Convergence
110

| 1 | 2 | 3 | 4 | 5 | } 111
| 6 | 7 | 8 | 9 | 10 |

AUTO.  MANU.  115 R 117  ↓  ↑
116  Avance  $119_1$  $119_2$  113
120  130  118  ←  →  $119_3$  $119_4$  119

+ + + + +
− − − − −
1  2
112

# FIG_15

11      6      10
2
9    5    1    4    8
3
12      7      13
125